# EUROPEAN PATENT SPECIFICATION

(11) **EP 2 918 091 B1**
(45) Date of publication and mention of the grant of the patent: **24.02.2016**
(21) Application number: 13795012.7
(22) Date of filing: 05.11.2013
(51) Int. Cl.: H04W 16/26, H04W 36/30, H04W 88/08, H04W 72/04, H04W 28/02, H04W 16/32, H04W 36/04

(54) **TRANSMISSION MODE SELECTION AND DOWNLINK SCHEDULING USING PRIMARY AND DEDICATED PILOT SIGNALS**
ÜBERTRAGUNGSMODUSAUSWAHL UND ABLAUFSTEUERUNG FÜR ABWÄRTSVERBINDUNGEN MITHILFE PRIMÄRER UND DEDIZIERTER PILOTSIGNALE
SÉLECTION DE MODE D'ÉMISSION ET PLANIFICATION DE LIAISON DESCENDANTE À L'AIDE DE SIGNAUX PILOTES PRIMAIRE ET DÉDIÉ

(30) Priority: 12.11.2012 US 201261725269 P; 18.01.2013 US 201361754221 P
(43) Date of publication of application: 16.09.2015
(73) Proprietor: Telefonaktiebolaget LM Ericsson (publ), 164 83 Stockholm (SE)
(72) Inventor: NAMMI, Sairamesh, S-164 48 Stockholm (SE); WANG, Yi-Pin Eric, Fremont, California 94539 (US); LARSSON, Erik, S-753 22 Uppsala (SE)
(74) Representative: Ericsson
(86) International application number: PCT/SE2013/051289
(87) International publication number: WO 2014/074055

(56) References cited:
- WO-A1-2012/112577
- WO-A1-2012/124552
- "3rd Generation Partnership Project; Technical Specification Group Radio Access Network; Coordinated multi-point operation for LTE physical layer aspects (Release 11)", 3GPP STANDARD; 3GPP TR 36.819, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 15 December 2011 (2011-12-15), pages 1-69, XP050555015, [retrieved on 2011-12-15]
- ERICSSON ET AL: "Combined Cell Deployment Scenarios in Heterogeneous Networks", 3GPP DRAFT; R1-125220 COMBINED CELL DEPLOYMENT SCENARIOS IN HETEROGENEOUS NETWORKS, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG1, no. New Orleans, USA; 20121112 - 20121116 3 November 2012 (2012-11-03), XP050663077, Retrieved from the Internet: URL:http://www.3gpp.org/ftp/tsg_ran/WG1_RL 1/TSGR1_71/Docs/ [retrieved on 2012-11-03]

## Description

### TECHNICAL FIELD

The present invention relates to wireless communication, and in particular to a method and system for transmission mode selection and downlink scheduling using primary and dedicated pilot signals in a wireless communication network.

### BACKGROUND

In a typical cellular radio system, wireless terminals, also referred to as user equipment, UEs, wireless terminals, mobile terminals, and/or mobile stations, communicate via a radio access network (RAN) with one or more core networks. The RAN covers a geographical area which is divided into cell areas, with each cell area being served by a radio base station, also referred to as a base station, a RAN node, a "NodeB", and/or enhanced NodeB (eNodeB). A cell area is a geographical area where radio coverage is provided by the base station equipment at a base station site. The base stations communicate through radio communication channels with wireless terminals within range of the base stations.

Recently, cellular communication network operators have started to offer broadband based mobile communication on wide band code division multiple access/ high speed packet access (WCDMA/HSPA) networks. Further, fueled by new devices designed for data applications, the end user performance requirements are steadily increasing. The increase in use of mobile broadband networks has resulted in high traffic volume. In particular, the volume of WCDMA/HSPA networks has grown significantly. Therefore, techniques that allow cellular operators to manage their network more efficiently have been sought.

According to some known techniques, it is possible to improve the downlink performance by introducing support for 4-branch multiple input multiple output (MIMO) multi-flow communication, multi carrier deployment etc. However, the spectral efficiency per link is approaching theoretical limits. As such, additional features for high speed downlink packet access (HSDPA) are needed to provide a uniform user experience anywhere inside a cell.

Two types of cell configurations are useful for attempting to achieve more uniform coverage within a cell. One type of cell configuration is a homogeneous network and another type is a heterogeneous network. A homogeneous network is a network of base stations in a planned layout and a collection of user terminals in which all base stations have similar transmit power levels, antenna patterns, receiver noise floors, and similar backhaul connectivity to the data network. Moreover, all base stations in the homogenous network offer unrestricted access to user terminals in the network, and serve roughly the same number of user terminals. Current wireless systems that include homogeneous cell configurations include global system for mobile communications (GSM), wide band code division multiple access (WCDMA), high speed packet access (HSDPA), long term evolution (LTE), and worldwide interoperability for microwave access (WiMax).

Currently, heterogeneous networks are being developed for third generation partnership project (3GPP) as discussed, for example, in: RP-121436, Study on UMTS Heterogeneous Networks, TSG RAN Meeting # 57, Chicago, USA, 4th-7th September 2012; R1-124512, Initial considerations on Heterogeneous Networks for UMTS; Ericsson , ST-Ericsson, 3GOO TSG RAN WG1 Meeting #70bis, San Diego, CA, USA, 8th-12th October 2012; and R1-124513, Heterogeneous Network Deployment Scenarios, Ericsson , ST-Ericsson, 3GPP TSG-RAN WG1 #70bis, San Diego, CA, USA, 8th-12th October 2012.

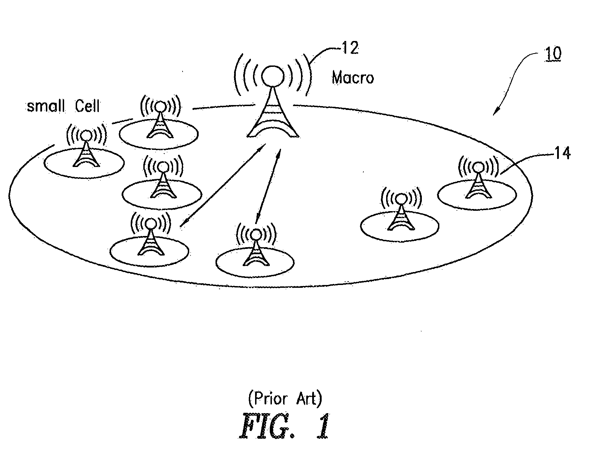

FIG. 1 shows an example of a known heterogeneous network 10 that includes a macro-base station 12, and a plurality of micro/pico/femto/relay/remote radio unit, RRU, nodes 14, referred to herein as low power nodes, LPN 14. Note that the power transmitted by these LPNs 14 is relatively small compared to that of macro base stations (MBS) 12, e.g. 2W as compared to 40W for a typical macro base station. The LPNs 14 are deployed to eliminate coverage holes in the coverage of the macro base station 12, and to offload data traffic from the macro base station 12 to the LPNs 14, thereby improving the capacity in hot-spot scenarios. Due to lower transmit power and smaller physical size, an LPN 14 can offer flexible site acquisitions.

In some heterogeneous networks, base stations may be configured such that macro base station 12 and each LPN base station 14 operating within a coverage area of the macro base station 12 may have its own cell identity ID, e.g., a unique scrambling code. Accordingly, the macro base station 12 and each LPN base station 14 may operate as different or independent base stations. Macro base station 12 and LPN base stations 14 within a macro cell area may thus share the same frequency but use different cell identities, e.g., different scrambling codes, and this arrangement may be referred to as co-channel deployment with each LPN and MBS having a unique cell identity, e.g., a unique scrambling code.

One disadvantage with the deployment of FIG. 1 is that each LPN creates a different cell. Hence, a user equipment, UE, may need to perform a soft handover when moving from an LPN to the macro-base station or to another LPN. Hence higher layer signaling is needed to perform handover.

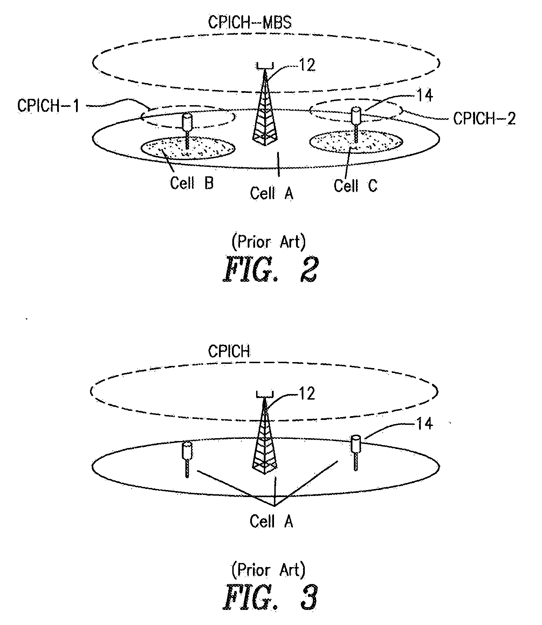

FIG. 2 shows a heterogeneous network where low power nodes, LPN, 14 are part of the macro cell, i.e. a combined cell. A combined cell can be viewed as a distributed antenna system, and is beneficial in many ways. For example, one transmission antenna can be set up at the macro-base station, main unit, 12, while two other antennas can be installed as LPNs 14 (RRUs) at other locations and communication between different nodes can employ a fast backhaul. This arrangement has reduced soft handover requirements, as well as energy savings and reduced interference provided by better co-ordination between nodes. Note that herein, the terms macro-base station, base station, main unit and main node may be used interchangeably.

In some configurations, each base station 12 and 14 may provide service using a respective individual or independent pilot signal, e.g., common pilot channel (CPICH)-MBS, CPICH-1, and CPICH-2, downlink control channels, uplink control channels, and data traffic channels. Thus, each base station may act independently so that each cell may be characterized by respective individual, different identifications, e.g., different scrambling codes, pilot signals/channels, downlink control channels, uplink control channels, and data traffic channels. Accordingly, each base station may provide service using a different common pilot channel (CPICH). Using LPN base stations 14 in the network configuration of FIG. 2, LPN base stations 14 may provide load balancing, thereby increasing system throughput and/or cell edge user throughput.

In some other heterogeneous networks, base stations may be configured such that the macro base station 12 and each LPN base station 14 operating within the coverage area of the macro base station 12 may share a same cell identity, e.g., a same scrambling code. This configuration may be referred to as a soft cell, shared cell or combined cell configuration. Such a configuration is shown in FIG. 3. Moreover, soft handover operations may be reduced or avoided as the wireless terminal moves in and out of LPN base station 14 coverage areas, thereby reducing higher layer signaling used to perform soft handover operations. Note that all of the macro base station 12 and LPN base stations 14 operating in cell in the soft/shared/combined cell configuration of FIG. 3 may provide service using the same identification, e.g., the same scrambling code and frequency, the same pilot signal(s)/channel, e.g., CPICH, the same downlink control channel, the same uplink control channel, and the same data traffic channel.

A feature of the soft/shared/combined cell configuration of FIG. 3 is that soft/combined cell transmissions from different base stations may provide spatial reuse. Two sufficiently spaced LPN base stations 14 in a soft/shared/combined cell configuration may provide downlink transmissions to respective wireless terminals using the same frequency, e.g., carrier 1, and using the same identify/identification, e.g., scrambling code 1, during the same downlink TTI (transmission time interval). In one configuration, the two LPNs may even use the same spreading codes to serve different UEs. In other configurations, the two LPN base stations 14 may use the same frequency but different spreading codes to serve different UEs.

Deployment of multiple LPNs within a combined cell may cause additional intra- and inter-cell interference. Hence, arrangements for managing the LPNs are needed. WO 2012/124552 A1 describes probing from a macro-base station in a wireless communication network. 3GPP TR 36.819 V11.1.0 (2011-12) is a technical specification pertaining to coordination between base stations, namely CoMP.

### SUMMARY

The present invention advantageously provides methods and systems for probing in a wireless communication network as defined by independent claims 1, 6, 9, 12, and 14. According to one aspect, a method includes directing at least one low power node to transmit a probing signal, where the probing signal includes at least one code. The method also includes receiving from a wireless terminal an indication of downlink channel quality. The channel quality is based on a measure of power of the probing signal received by the wireless terminal. The method further includes selectively directing at least one of the at least one low power node to communicate with the wireless terminal. The selecting is based on the indication of downlink channel quality.

In one embodiment, each of a plurality of low power nodes is directed to transmit the probing signal in succession. In another embodiment, each of a plurality of low power nodes is directed to transmit the probing signal simultaneously. In some embodiments, the measure of power is one of a signal to noise ratio and a signal to noise plus interference ratio. Also, the code may be known to the wireless terminal, for example, by pre-transmitting the code in a broadcast and control signaling message. The code may be at least one of a channelization code, a scrambling code and a pilot symbol pattern. In some embodiments, a different spreading, channelization, or orthogonal variable spreading factor (OVSF) code is transmitted by each one of a plurality of low power nodes. The terms spreading code, channelization code and OVSF code may be used interchangeably herein. In one embodiment, the probing signal is transmitted by a plurality of different beam patterns in succession.

According to another aspect, the invention provides a method of providing, via one of a macro base station and a low power node base station, communications in a radio access network including a plurality of base stations, where the radio access network is in communication with a wireless terminal over a first downlink channel from a first low power node base station of the plurality of base stations to the wireless terminal. The method includes providing probing signal quality information for a second downlink channel from a second low power node base station of the plurality of base stations to the wireless terminal. The method also includes providing reported channel quality information by the wireless terminal. Downlink scheduling information is generated based on the probing signal quality information and based on the reported channel quality information for a downlink transmission to the wireless terminal using the first downlink channel from the first low power node base station to the wireless terminal.

According to this aspect, in some embodiments, the scheduling information is transmitted to the wireless terminal and downlink data from the first low power node base station is transmitted to the wireless terminal over the first downlink channel in accordance with the scheduling information. In some embodiments, transmitting the downlink scheduling information to the wireless terminal includes transmitting the downlink scheduling information over a shared control channel (HS-SCCH), and transmitting the downlink data includes transmitting the downlink data over a physical downlink shared channel (HS-PDSCH). In some embodiments, the probing signal quality information is based on probing information generated by the wireless terminal responsive to a probing pilot signal transmitted by the second low power node base station. In some embodiments, the probing information includes a probing signal strength generated by the wireless terminal responsive to the probing pilot signal. In some embodiments, providing the probing information includes providing a probing signal strength responsive to the probing pilot signal. In some embodiments, the reported channel quality information includes at least one of modulation information, code rate information, and transport block size information generated by the wireless terminal responsive to the primary pilot signal (P-CPICH). In some embodiments, providing the reported channel quality information includes generating a reported signal strength responsive to the reported channel quality information. In some embodiments, the probing pilot signal has a first identification and the primary pilot signal (P-CPICH) has a second identification different than the first identification. In some embodiments, the first identification comprises a first spreading code, where the second identification comprises a second spreading code, and where the first and second spreading codes are orthogonal with respect to each other. In some embodiments, two or more LPNs may share the second identification, e.g., spreading codes, provided that these LPNs are configured to have different probing periods.

According to another aspect, the invention provides a macro base station that includes a central controller. The central controller is configured to direct at least one low power node to transmit a probing code according to a plurality of transmission patterns to a wireless terminal. The central controller is also configured to receive from the wireless terminal indications of channel quality by which the probing code is received by the wireless terminal. Each indication of channel quality corresponds to a different one of the plurality of transmission patterns.

In some embodiments, the central controller is further configured to determine which transmission pattern to use for transmission of data to the wireless terminal based on the received indications of channel quality. A different probing code may be transmitted for each of the plurality of transmission patterns. Transmission of a probing code may occur periodically. In one embodiment, the central controller further directs at least one of the at least one low power node to refrain from transmitting to the wireless terminal based on the received indications of channel quality. The probing code may exhibit a variable spreading factor.

According to another aspect, the invention provides a method of operating a wireless terminal in a radio access network including a plurality of base stations. The method includes generating probing information responsive to a probing pilot signal received from the radio access network, wherein the probing pilot signal has a first identification. The wireless terminal transmits the probing information to the radio access network. Reported channel quality information responsive to a primary pilot signal (P-CPICH) received from the radio access network is generated, where the primary pilot signal has a second identification different than the first identification. The wireless terminal transmits the reported channel quality information to the radio access network.

According to this aspect, in some embodiments, the first identification comprises a first channelization code, wherein the second identification comprises a second channelization code, and wherein the first and second channelization codes are different. In some embodiments, the first channelization code comprises a first scrambling code and wherein the second identification comprises a second scrambling code. In some embodiments, the first and second scrambling codes are orthogonal with respect to each other.

According to another aspect, the invention provides a wireless terminal having a memory and a processor. The memory is configured to store a probing channel code, the probing channel code being received from a base station and at least one low power node. The memory is also configured to store a channel quality indication associated with the probing channel code. The processor is configured to detect the probing channel code and to determine a channel quality indication of a signal carrying the probing channel code.

According to this aspect, in some embodiments, the received probing channel code is one of a primary pilot signal and a probing pilot signal. In some embodiments, the channel quality indication is transmitted on an uplink via one of a high speed dedicated physical control channel, HS-DPPCH, and a special probe channel. In some embodiments, a type of the channel quality indication is determined by the base station.

Embodiments herein provide a probing mechanism that is used to determine which transmission mode or pattern provides the highest throughput, improving the performance of the wireless communication network.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a diagram of a known heterogeneous network including a macro-base station and a plurality of low power nodes;
FIG. 2 is a diagram of a known network wherein low power nodes have different cell identifications;
FIG. 3 is a diagram of a known heterogeneous network including a macro-base station and a plurality of low power nodes;
FIG. 4 is a diagram of a common channel network configuration constructed in accordance with principles of the present invention;
FIG. 5 is a block diagram of an exemplary base station constructed in accordance with principles of the present invention;
FIG. 6 is a flowchart of an exemplary process for selecting transmission modes according to principles of the present invention;
FIG. 7 is a block diagram of an exemplary user equipment, UE, constructed in accordance with principles of the present invention;
FIG. 8 is a message sequence chart illustrating communications between UEs and base stations, with a selected base station transmitting scheduling information on a shared control channel, HS-SCCH;
FIG. 9 is a message sequence chart illustrating communications between UEs and base stations, with a selected base station transmitting a dedicated/demodulation pilot signal, D-CPICH-1;
FIG. 10 is a message sequence chart illustrating communications between UEs and base stations, with all base stations transmitting scheduling information on a shared control channel, HS-SCCH and with a selected base station transmitting a dedicated/demodulation pilot signal, D-CPICH-1;
FIG. 11 is a message sequence chart illustrating communications between UEs and base stations, with all base stations transmitting a pilot probing signal to enable estimation of channel quality on the downlinks and with a selected base station transmitting a dedicated/demodulation pilot signal, D-CPICH-1;
FIG. 12 is an HS-DPCCH structure for single input multiple output (SIMO) communications;
FIG. 13 is a diagram of channel structures for base station nodes in a heterogeneous network using soft/shared/combined cell deployment;
FIG. 14 is a block diagram of a network configuration constructed according to principles of the present invention;
FIG. 15 is a block diagram illustrating a UE constructed in accordance with principles of the present invention;
FIG. 16 is a block diagram illustrating a macro base station constructed in accordance with principles of the present invention;
FIG. 17 is a block diagram illustrating a low power node base station constructed in accordance with principles of the present invention;
FIG. 18 is a flow chart of an exemplary process of transmitting probing signals and generating reported channel quality in accordance with principles of the present invention;
FIG. 19 is a flow chart of an exemplary process of generating scheduling information based on reported signal quality information in accordance with principles of the present invention; and
FIG. 20 is a graph illustrating results of simulations using link adaptation in a heterogeneous network with soft/combined cell deployment.

### DETAILED DESCRIPTION

Before describing in detail exemplary embodiments that are in accordance with the present invention, it is noted that the embodiments reside primarily in combinations of apparatus components and processing steps related to transmission mode selection and downlink scheduling using primary and dedicated pilot signals in a wireless communication network. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

Embodiments described herein provide methods and systems for determining how to transmit in the downlink (DL) to UEs in a combined cell deployment. This includes, for example, how to select which nodes take part in a DL transmission and which nodes can be turned off. This provides benefits such as reduced energy consumption, and reduced inter- and intra-cell interference.

For purposes of illustration and explanation only, these and other embodiments of present inventive concepts are described herein in the context of operating in a Radio Access Network (RAN) that communicates over radio communication channels with wireless terminals (also referred to as UEs). It will be understood, however, that present inventive concepts are not limited to such embodiments and may be embodied generally in any type of communication network. As used herein, a wireless terminal or UE can include any device that receives data from a communication network, and may include, but is not limited to, a mobile telephone, cellular telephone, laptop/portable computer, pocket computer, hand-held computer, desktop computer, a machine to machine (M2M) or mobile terminated call (MTC) type device, a sensor with a wireless communication interface, etc.

In some embodiments of a RAN, several base stations may be connected, e.g., by land lines or radio channels, to a radio network controller (RNC). A radio network controller, also sometimes termed a base station controller (BSC), may supervise and coordinate various activities of the plural base stations connected thereto. A radio network controller may be connected to one or more core networks. According to some other embodiments of a RAN, base stations may be connected to one or more core networks without a separate RNC(s) there between, for example, with functionality of an RNC implemented at base stations and/or core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) technology. UTRAN, short for Universal Terrestrial Radio Access Network, is a collective term for the Node B's and Radio Network Controllers which make up the UTRAN radio access network. Thus, UTRAN is essentially a radio access network using wideband code division multiple access for UEs.

The Third Generation Partnership Project (3GPP) has undertaken to further evolve the UTRAN and GSM based radio access network technologies. In this regard, specifications for the Evolved Universal Terrestrial Radio Access Network (E-UTRAN) are ongoing within 3GPP. The Evolved Universal Terrestrial Radio Access Network (E-UTRAN) comprises the Long Term Evolution (LTE) and System Architecture Evolution (SAE).

Note that although terminology from WCDMA and/or HSPA is used in this disclosure to exemplify embodiments of the inventive concepts, this should not be seen as limiting the scope of inventive concepts to only these systems. Other wireless systems, including 3GPP (3rd Generation Partnership Project) LTE (Long Term Evolution), WiMax (Worldwide Interoperability for Microwave Access), UMB (Ultra Mobile Broadband), HSDPA (High-Speed Downlink Packet Access), GSM (Global System for Mobile Communications), etc., may also benefit from exploiting embodiments of present inventive concepts disclosed herein.

Also note that terminology such as base station, also referred to as NodeB, eNodeB, or Evolved Node B, and wireless terminal, also referred to as Wireless terminal node or UE, should be considering non-limiting and does not imply a certain hierarchical relation between the two. In general a base station, e.g., a "NodeB" or "eNodeB", and a wireless terminal, e.g., a "UE", may be considered as examples of respective different communications devices that communicate with each other over a wireless radio channel. While embodiments discussed herein may focus on wireless transmissions in a downlink from a NodeB to a UE, embodiments of inventive concepts may also be applied, for example, in an uplink. Furthermore, although the description below focuses, for purposes of illustration, on example embodiments in which described solutions are applied in heterogeneous networks that include a mix of relatively higher-power, e.g., "macro", base stations and relatively lower-power node, e.g., "pico", base stations, the described techniques may be applied in any suitable type of network, including both homogeneous and heterogeneous configurations. Thus, the base stations involved in the described configurations may be similar or identical to one another, or may differ in terms of transmission power, number of transmitter-receiver antennas, processing power, receiver and transmitter characteristics, and/or any other functional or physical capability.

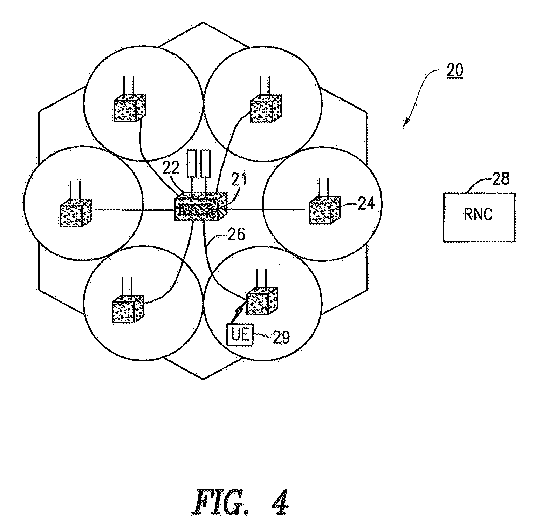

FIG. 4 is a diagram of an exemplary combined cell 20 constructed in accordance with principles of the present invention. A macro-base station 22 functions as a main unit that controls LPNs 24. The LPNs 24 can be viewed as a distributed antenna deployment, where each LPN 24 corresponds to one or more antenna heads, with its own or a shared power amplifier. Each LPN 24 has a fast communication link 26. e.g. fiber or mini-link, with the main unit 22 that is in control of the LPNs 24. In some embodiments a radio network controller 28 communicates with the base station 22 and performs some of the functions described herein for probing and transmission mode selection.

A central controller (CC) 21 located at the macro base station 22 may collect operational statistics information based on network environment measurements provided by base stations, wireless terminals, etc. Accordingly, decisions regarding which LPN nodes 24 should transmit to a specific UE, i.e., wireless terminal, 29 may be made by the base station 22 based on the operational statistics information, including information provided by the UE 29, by the macro base station 22, and/or by one or more of LPN base stations 24. Centralized control of operations of the macro base station 22 and LPN base stations 24 may thus be provided by a central controller 21 of the macro base station 22. While functionality and elements of the central controller 21 are discussed as residing at the macro base station 22, functionality and elements of the central controller 21 may be implemented separate from any of the base stations, at one or more LPN base stations, and/or distributed between one or more elements of the network, e.g., distributed between or more macro and/or LPN base stations. Moreover, while 6 LPN base stations 24 are shown operating within the macro cell area of the macro base station 22, by way of example, any number of LPN base stations may operate within the macro cell area according to embodiments disclosed herein.

In some embodiments, a probing mechanism is introduced that the main unit 22 can use to determine which transmission mode or pattern provides optimum throughput. One or more channelization codes are used as probing channels. These codes can be dedicated probing codes, or may serve as probing codes only during particular measurement periods, while being used for other purposes at other times. In some embodiments, the UEs 29 in the cell or network are informed about the channelization codes used as probing codes. In some embodiments, the UEs 29 in the cell or network may be further informed about the transmission timing such as the measurement periods of each of the probing channels. The definition of a probing channel can further include scrambling code information or pilot symbol pattern. Thus, generally speaking, a probing channel is defined by the combination of one or more of the following information: scrambling code, channelization code, and pilot symbol patterns. The definition of the probing channels used in a cell may be signaled using a cell-wide broadcast message or UE-specific radio resource control, RRC, signaling. Also, an additional UE-specific signaling can be used to instruct the UE 29 to monitor all or a subset of the probing channels.

The base station 22 decides how to utilize the probing channel, i.e. how to transmit the probing channel. For example, the base station 22 may signal to a particular LPN to transmit or not transmit, or transmit with low power, based on measurements from the UE 29, geographical location of the UE 29, and/or a channel quality indication associated with an individual LPN. In one embodiment, the base station instructs the LPNs 24 to transmit one probe channel from one LPN 24 at a time until all of a group of LPNs 24 have been used. In another embodiment, a probe channel may be transmitted from several LPNs 24 at the same time, potentially in a beam forming pre-coding manner. In yet another embodiment, the base station 22 may cause the LPNs 24 to transmit with each of a plurality of specific fixed antenna beams, one beam at time.

For example, a typical antenna may consist of several antenna elements that have a fixed or semi-fixed spatial relationship between them in order to create a beam pattern that may be varied according to elevation and azimuth, for example. In advanced antennas systems, the antenna elements may be tuned to create different fixed or variable antenna beams. One of these beam patterns might give a specific UE 29 a much better quality than any other beam. A combination of different transmission schemes may be employed. For example, if by transmitting a probe channel by one LPN 24 at a time it is found that three of them have roughly the same quality, then the base station 22 may cause combinations of these three to transmit at the same time to determine a best transmission pattern.

Note that the base station 22 can switch any of these schemes without informing the UE 29, as long as the duration of the averaging window within which the UE 29 is allowed to smooth its observation is known. Furthermore, the different transmission schemes mentioned above may be cycled using one probing channel. This allows the network to try out different transmission schemes without expanding the number of probing channels. The probe channel may transmit a known bit/symbol sequence. The probe channel can have a fixed or varying spreading factor.

The UE 29 measures the quality of the probing channel, and reports the quality to the main node 22. In one embodiment, the UE 29 reports a plurality of measures of channel quality to the base station 22. Alternatively, the UE 29 may report only the best of several measures of channel quality. Time slots for reporting the quality measures may be assigned to the UEs 29. In one embodiment, the UE 29 measures and reports channel quality periodically. Alternatively, a UE 29 may measure and report channel quality when instructed by the base station 22. The UE 29 reports can contain different amounts of information, e.g. one quality measure such as received signal code power (RSCP), signal to noise ratio (SNR), signal to noise plus interference ratio (SNIR), and channel quality index (CQI) or several quality measures. The measure should reflect the receiver type the UE 29 employs. The report may also, for example, include a UE "identity" and/or a measurement identity so that the base station 22 knows what transmission mode/pattern the report is associated with.

In some embodiments, the UE 29 only reports channel quality when the channel quality exceeds a threshold. The threshold can be an absolute threshold or be relative to other measures, for example the common pilot channel (CPICH). If the threshold is relative, the transmit power allocated to the probing channel can be taken into consideration, in which case, both the base station 22 and the UE 29 know the transmit power.

Based on the UE report, the main unit 22 can make a decision about which transmission pattern of the probed transmission patterns is best for the UE 29, and then employ this transmission pattern for regular data transmissions. Regular data transmissions could imply only the data channel, or a combination of data and control channels. The main unit 22 can make all choices - allocate probing codes, decide transmission patterns, measurement periods, etc. - without informing the radio network controller, RNC, 28. Embodiments with RNC 28 involvement can also be implemented, for example, to help in cell hand-over scenarios. Also, the RNC 28 can control some of the mechanisms, e.g. allocate probing codes, and the main unit 22 can control other mechanisms, e.g., decide transmission mode. Information about how to run the probing mechanisms can be conveyed from the RNC 28 to the main unit 22, e.g., employing higher-layer signaling or L1 signaling, e.g., high speed shared control channel, HS-SCCH orders. This information may include probing channel information, measurement periods, reporting periods, etc.

In some embodiments, transmission decisions by the base station 22 or RNC 28 may be based on long-term fading properties of a channel, i.e., semi-static configurations. Decisions can also be based on fast-fading information. In semi-static configurations the transmission mode/pattern does not change frequently, which means that the probing can be done very infrequently, and that the UE quality measure should average out fast-fading channel properties. Note that although only one UE is shown in FIG. 4, in practice there will be a plurality of UEs, each in communication with the base station 22, and/or LPNs 24.

The UE quality reporting can be conveyed in several ways. For example, in-band signaling, or utilizing an existing/modified/new layer one feedback channel can be employed. One concrete example of how to report the probe channel quality without introducing any new feedback channel would be to re-use the existing channel quality indicator, CQI, mechanism. In some embodiments, the UE estimates a CQI from the probe channel and conveys this information on the HS-DPCCH, using either the same HS-DPCCH CQI format as data employs, or a special probe channel HS-DPCCH CQI format. The latter alternative can be achieved by introducing a new CQI type, e.g. Type 3. The transmission of Type 1, Type 2 and Type 3 CQI formats would then be configured by the main unit 22, e.g. periodically. The CQI estimate of the probe channel may not make any assumptions of desired pre-coding as done for data CQI, e.g., a precoding control index, PCI, and could rely on new coding formats and CQI tables or re-use existing ones, e.g. the Rel-5 (20,5) block code.

The probing mechanism can be used for other deployments than combined cells. The probing mechanism can be used for aiding network deployments, e.g. self-organizing networks. In that case the probing can be done very seldom and may be handled by the RNC 28, e.g. information from several cells can be taken into consideration. The probing mechanism described herein may be combined with other information such as, UE position within a cell, pilot quality, uplink, UL, channel quality, or neighboring cell interference. For example, a neighbor cell may report, via the RNC 28 or a fast backhaul, its own cell interference situation during the probing intervals. This can aid the main unit 22 to determine whether a particular transmission mode creates too much inter-cell interference. For example, turning off an LPN 24 that is close to another cell might beneficially reduce interference in the other cell.

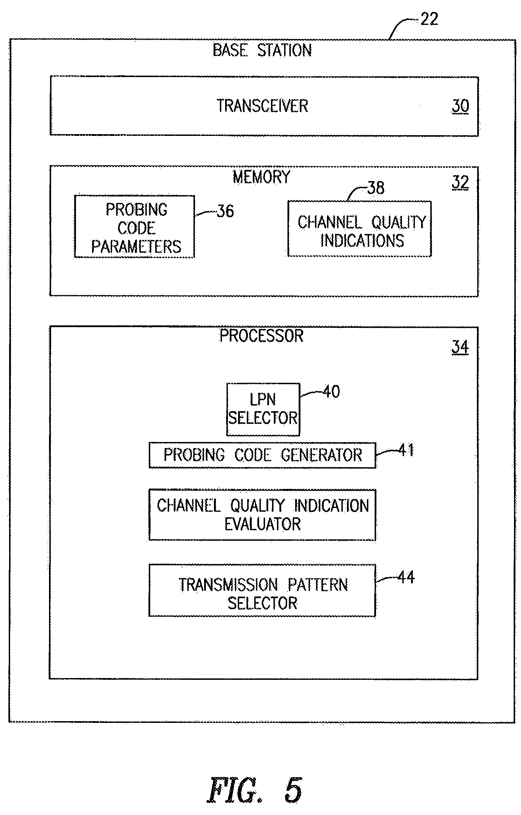

FIG. 5 is a block diagram of an exemplary base station 22, implemented according to principles of the present invention. The base station 22 includes a transceiver 30, a memory 32 and a processor 34. The transceiver 30 is configured to communicate with the at least one low power node and to communicate with the user equipment. The memory 32 is configured to store one or more parameters 36 for generating probing codes and a plurality of channel quality indications 38 received by the transceiver 30 from a UE. The processor 34 includes an LPN selector 40 configured to select one or more of at least one LPN 24 to transmit a probing code to the wireless terminal according to at least one transmission pattern. The processor 34 also includes a probing code generator 41 that generates probing codes based on the parameters 36. The processor 34 includes a channel quality indication evaluator 42 configured to evaluate the plurality of channel quality indications. The processor 34 further includes a transmission pattern selector 44 to select a transmission pattern for transmission by the transceiver of data to the wireless terminal based on the evaluation.

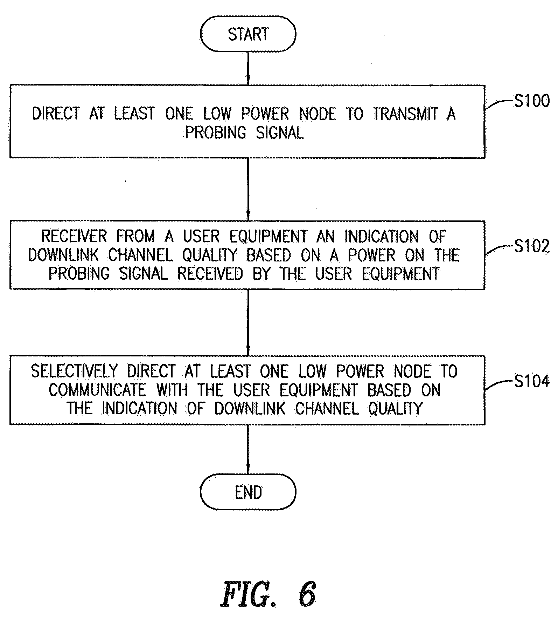

FIG. 6 is flowchart of an exemplary process for determining a transmission mode to communicate with a UE. At least one low power node is directed to transmit a probing signal (block S100). An indication of downlink channel quality based on a power of the probing signal received by the UE is received from the UE (block S102). At least one low power node is selectively directed to communicate with the UE based on the indication of downlink channel quality (block S104).

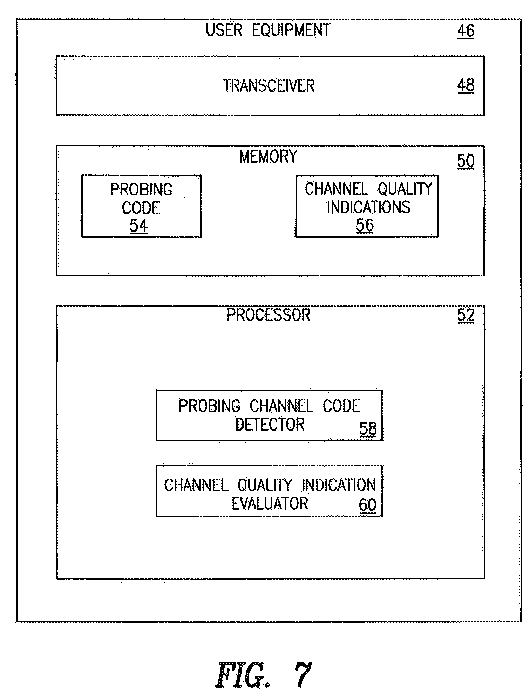

FIG. 7 is a block diagram of an exemplary UE constructed in accordance with principles of the present invention. The UE 29 includes a wireless transceiver 48 for receiving signals carrying a probing channel code from a base station and low power nodes, and for transmitting channel quality indications to the base station. The UE 29 also includes a memory 50 and a processor 52. The memory 50 is configured to store at least one probing channel code 54. A probing channel code is transmitted by the base station and/or at least one low power node. The memory 50 also includes channel quality indications associated with a probing channel code. The processor 52 functions to detect the probing channel 58 and to determine a channel quality indication 60 of a signal carrying the probing channel.

In a soft/shared/combined cell configuration/deployment, transmitting the same signal from all base station nodes to a wireless terminal may be an inefficient use of resources and may not provide a significant/useful increase in capacity when the load of a cell is relatively high. One way to increase capacity in a soft/shared/combined cell deployment may be to reuse a resource, e.g., a code, among various base stations, and this may be referred to as spatial reuse.

For more efficient implementation of spatial reuse, a scheduler of the central controller may schedule the wireless terminals to appropriate respective nodes, e.g., LPN base stations. If a wireless terminal is located nearer to a first LPN base station but a downlink data transmission is scheduled from another LPN base station to the wireless terminal, for example, additional resources, e.g., higher power, greater bandwidth, etc., may be used when transmitting from the more distant LPN base station, relative to transmission from the closer LPN, thereby resulting in inefficiency.

In addition, a pilot signal/channel may be used, for example, for channel sounding, data demodulation, synchronization, etc. In a soft//shared/combined cell deployment, all base stations, including the macro base station 22, and LPN base stations 24, may transmit the same common pilot signal, e.g., primary common pilot channel or P-CPICH, for channel sounding so that all wireless terminals in the macro cell area may receive the same common pilot signal/channel from multiple sources. By taking advantage of spatial reuse, downlink data may be transmitted from only one base station, e.g., one of macro base station 22 or an, LPN base station 24 or from a subset of the plurality of base stations, i.e., at least one but not all of the base stations.

If a wireless terminal estimates the downlink channel using the primary common pilot channel that is transmitted from all of the base stations, however, the resulting channel estimate may be inappropriate or ineffective for use when transmitting a downlink data signal using fewer than all of the base stations. In other words, using a channel estimate and/or demodulating based on the common pilot signal transmitted from all base stations may result in significant error and/or failed reception at the wireless terminal UE when transmitting downlink data from fewer than all of the base stations so that the wireless terminal UE may be unable to successfully receive/demodulate/decode the downlink data signal.

According to some embodiments, methods of transmission and reception may be provided to increase efficiency for downlink transmissions in soft/shared/combined cell deployments with spatial reuse. According to some embodiments, methods, nodes, and networks may be provided to schedule wireless terminals for downlink data transmissions in soft/shared/combined cell deployments with spatial reuse whereby capacity gains may be similar to that of co-channel deployments.

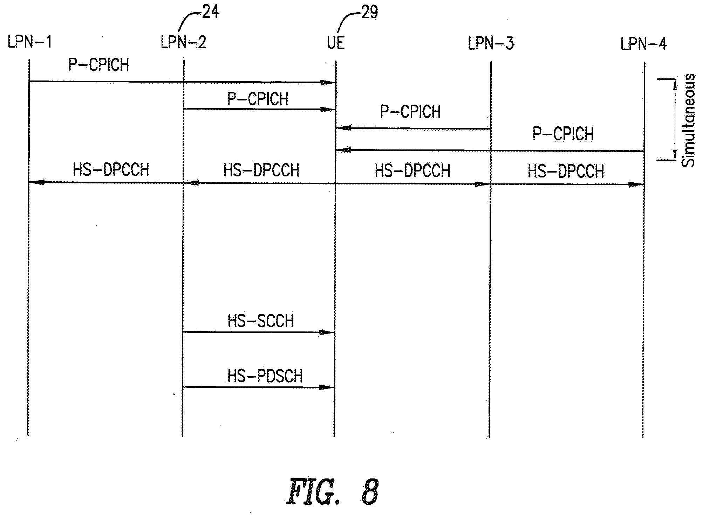

FIG. 8 is a chart of exemplary message sequences/flows illustrating messaging in a soft/shared/combined cell deployment with spatial reuse, with a selected base station transmitting scheduling information on a shared control channel, HS-SCCH. In the example of FIG. 8, each of a plurality of low power node (LPN) base stations 24, LPN-1, LPN-2, LPN-3, and LPN-4 and a macro base station 22, may simultaneously and continuously transmit a primary common pilot signal (P-CPICH). P-CPICH is shown at different horizontal levels of FIG. 8 to show that the same P-CPICH is transmitted from each base station without implying any offset in time of transmission. While messages to and from the macro base station are omitted for the sake of conciseness, the macro base station may also transmit the primary common pilot signal (P-CPICH) concurrently with the LPN base stations. Moreover, the primary common pilot signal may be transmitted by all macro and LPN base stations continuously/periodically and simultaneously.

Accordingly, the wireless terminal UE 29 of FIG. 8 may receive the primary common pilot channel from all base stations 22, 24 within a macro cell area. While only four low power node base stations 24 are shown by way of example, any number of LPN base stations transmitting the primary common pilot channel/signal may be included in the soft/combined cell deployment.

All macro and LPN base stations in the macro cell area may thus transmit the same primary pilot signal (P-CPICH) for channel sounding. Using the primary common pilot signal received from all the macro and LPN base stations 24, the wireless terminal UE may generate downlink channel estimates, and responsive to the downlink channel estimates, the wireless terminal UE 29 may generate channel quality information (CQI) that is provided as feedback to the network. The CQI information, e.g., including recommended/requested modulation information, coding information, transport block size information, MIMO precoding vector information, MIMO rank information, etc., is sent via a an uplink control channel, e.g., HS-DPCCH, to the base stations. Accordingly, the same HS-DPCCH uplink control channel/signal may be received by all of the base stations. A subset of base stations, e.g., base stations LPN-2, may transmit to the UE terminal a shared control channel HS-SCCH-1, and physical data shared channel HS-PDSCH for downlink transmissions to wireless terminal UE during a transmission time interval (TTI).

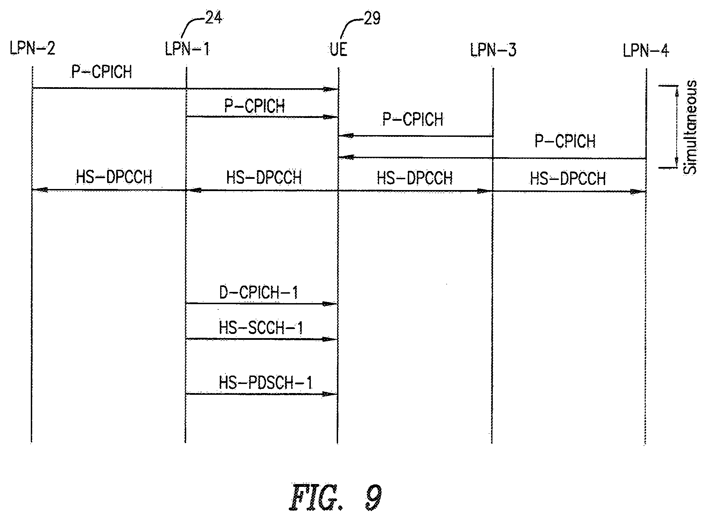

FIG. 9 is a message sequence chart illustrating communications between a UE and base stations, with a selected base station transmitting a dedicated/demodulation pilot signal, D-CPICH-1. In FIG. 9, the common primary pilot signal (P-CPICH) may be simultaneously transmitted from all macro 22 and LPN base stations 24 in the macro cell area. CQI feedback may be received via an uplink control channel, e.g., via high speed dedicated physical control channel or HS-DPCCH, from the UE 29, and a base station 22, 24 or subset of base stations may be selected for downlink transmissions to wireless terminal UE as discussed above with respect to FIG. 8.

Once the central scheduler function decides which base station, e.g., base station LPN-1, will transmit downlink communications to the UE, the selected base station will transmit a dedicated/demodulation pilot signal, e.g., a dedicated/ demodulation common pilot channel or D-CPICH-1, that may be used by the UE to estimate the downlink channel for data demodulation when receiving subsequent downlink data transmissions via a downlink data channel, e.g., via a high speed physical data shared channel or HS-PDSCH-1. The dedicated/demodulation pilot signal (D-CPICH-1) may be similar to the primary common pilot signal (P-CPICH-1) except that a different spreading code may be used. For example, each of the dedicated/demodulation pilot signal (D-CPICH-1) and the primary common pilot signal (P-CPICH) may include a same bit sequence that is spread using a different spreading code. According to some embodiments, each base station may use a respective dedicated/demodulation pilot signal (D-CPICH-MBS, D-CPICH-1, D-CPICH-2, D-CPICH-3, and D-CPICH-4) using a respective spreading code that is different than other dedicated/demodulation pilot signal spreading codes used by other base stations and that is different than the common primary pilot signal (P-CPICH) spreading code used by all base stations.

In some embodiments, the dedicated/demodulation pilot signal (D-CPICH) spreading codes may be reused by LPN base stations 24 in the macro cell area during a same TTI provided that they are sufficiently spaced apart. According to some embodiments, the spreading codes may be selected so that the common primary pilot signal (P-CPICH) transmitted by all base stations 22, 24 in the macro cell area may be orthogonal with respect to each dedicated/demodulation pilot signal (e.g., D-CPICH-1) transmitted by a respective base station (e.g., LPN-1). Moreover, a dedicated/demodulation pilot signal (D-CPICH-1) may be simultaneously transmitted using a same spreading code by a subset of the base stations that are simultaneously transmitting the same downlink data to the same wireless terminal UE during a same transmission time interval (TTI).

If the UE is configured to receive in a MIMO mode, an assigned base station LPN-1 may transmit a dedicated/demodulated pilot signal (D-DPICH-1) which is precoded using the appropriate MIMO precoding vector. If the scheduler of the central controller of the macro base station assigns more than one base station, i.e., a subset of base stations) for downlink transmission to the same UE during the same TTI, then the assigned base stations will transmit dedicated/demodulation pilot signals (D-PCICHs) that are the same/identical. More particularly, the assigned base stations will transmit a same dedicated/demodulation pilot signal (D-PCICH) using the same spreading code. The UE may then estimate the downlink channel using the dedicated/demodulation pilot signal(s) (D-CPICH) to receive/demodulate/decode the downlink signaling, e.g., provided over a high speed shared control channel HS-SCCH, and/or downlink data traffic, e.g., provided over a high speed physical downlink shared channel (HS-PDSCH).

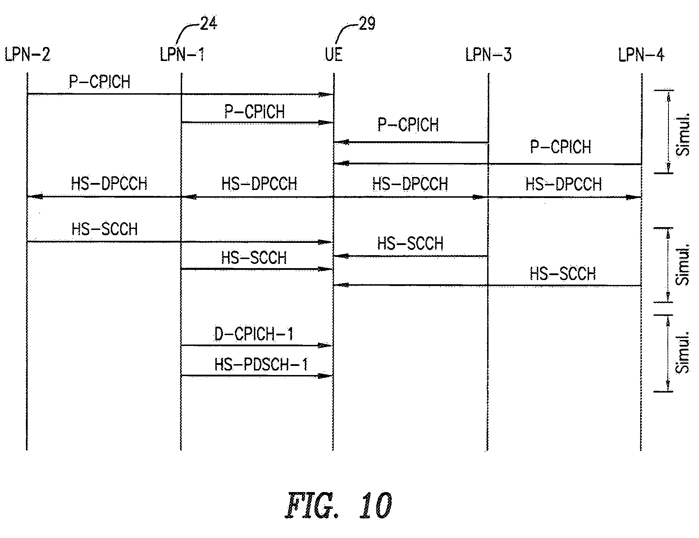

FIG. 10 is a chart of message sequences/flows illustrating messaging in a soft/shared/combined cell deployment with spatial reuse, with all base stations transmitting scheduling information on a shared control channel, HS-SCCH and with a selected base station transmitting a dedicated/demodulation pilot signal, D-CPICH-1. In the example of FIG. 10, a macro base station 22 may provide service over a macro coverage area, and each of LPN base stations 24, LPN-1, LPN-2, LPN-3, and LPN-4, may provide service over a respective LPN coverage area. Moreover, each of macro 22 and LPN 24 base stations may transmit a primary pilot signal, e.g., a primary common pilot channel or P-CPICH, having a first identification, e.g., a first spreading code, and the primary pilot signal may be transmitted simultaneously and continuously or periodically by all of the macro and LPN base stations. While four LPN base stations 24 are discussed by way of example, any number of LPN base stations 24 may operate within the macro cell area according to embodiments disclosed herein.

The UE 29 may receive the primary pilot signal (P-CPICH) and generate channel quality information (CQI) responsive to the primary pilot signal (P-CPICH) received from all of the macro and LPN base stations. This CQI information, for example, may include modulation information, code rate information, transport block size information, etc. If a radio access node and UE 29 support MIMO (multiple input multiple output) communications, the CQI information may also include MIMO precoding vector information and/or MIMO rank information. The UE 29 may transmit the channel quality information to the macro base station and LPN base stations over a control channel (HS-DPCCH), as shown in FIG. 10.

Responsive to the channel quality information received through the macro 22 and LPN 24 base stations, a central controller 21 of the macro base station 22 may select a subset of the plurality of base stations 22, 24 as discussed above with respect to FIG. 9. The selected subset, for example, may include only a single LPN base station LPN-1, or a plurality of LPN base stations 22 that is less than all of the base stations, e.g., LPN-1 and LPN-2.

According to embodiments of FIG. 10, downlink scheduling information may be transmitted simultaneously by all of the macro and LPN base stations over a shared control channel (HS-SCCH) after selecting the base station (LPN-2) or base stations. In embodiments of FIG. 10, the downlink scheduling information may be transmitted while transmitting the primary pilot channel (P-CPICH) through all of the macro and LPN base stations without transmitting the dedicated/demodulation pilot channel.

Downlink data traffic may then be transmitted to the UE 29 using only the selected base station (LPN-1) or base stations 22, 24 using a dedicated/demodulation pilot signal (D-CPICH-1) having a second identification, e.g., a second spreading code, that is different than the first identification. The primary pilot signal (P-CPICH) may be identified using a first identification, e.g., a first spreading code, the dedicated demodulation pilot signal (D-CPICH) may be identified using a second identification, e.g., a second spreading code, and if spreading codes are used for the first and second identifications, the first and second spreading codes may be orthogonal with respect to each other.

The demodulation pilot signal (D-CPICH-1) and the downlink data traffic (HS-PDSCH-1) may be transmitted from only the selected base station (LPN-1) or base stations 22, 24 during a same transmission time interval (TTI). More particularly, the downlink data traffic may be transmitted from only the selected base station (LPN-1) or subset of base stations 22, 24 to the UE 29 in accordance with the downlink scheduling information. By transmitting the demodulation pilot signal (D-CPICH-1) from only the selected base station(s) 22, 24 while transmitting the downlink data traffic (HS-PDSCH-1) from only the selected base station(s), the UE 29 may use the demodulation pilot signal (D-CPICH-1) to receive/demodulate/decode the downlink data traffic. By transmitting the primary pilot signal (P-CPICH) from all base stations 22, 24 while transmitting the scheduling information (HS-SCCH) from all base stations 22, 24, the UE 29 may use the primary pilot signal (P-CPICH) to receive/demodulate/decode the scheduling information (HS-SCCH).

Because the channel quality information is based on the primary pilot signal (P-CPICH), which is received from the UE 29 through all of the plurality of base stations, the received channel quality information is an appropriate basis for transmission from all of the plurality of base stations 22, 24 to the UE 29. Accordingly, the downlink scheduling information (HS-SCCH) may be transmitted from all of the plurality of base stations 22, 24 based on the channel quality information received from the UE 29 without additional signaling, and the scheduling information (HS-SCCH) may be received/demodulated/decoded using the primary pilot signal (P-CPICH) that is transmitted from all of the plurality of base stations 22, 24.

The scheduling information may include at least one of an identification of the subset of the plurality of base stations 22, 24 and/or an identification of the demodulation pilot signal that can be used by the UE 29 to receive the downlink data traffic. The downlink data traffic and the dedicated/demodulation pilot signal may then be transmitted in accordance with the scheduling information during a transmission time interval (TTI). Moreover, transmitting the downlink scheduling information may include transmitting the downlink scheduling information over a shared control channel (HS-SCCH), and transmitting the downlink data traffic may include transmitting the downlink data traffic over a physical downlink shared channel (HS-PDSCH-1).

The scheduling information may include at least one of modulation information, code information, and/or transport block size information, and if MIMO is being used, the scheduling information may also include at least one of multiple-input-multiple-output, MIMO, precoding vector information and/or MIMO rank information.

Accordingly, a UE 29 operating according to embodiments of FIG. 10 may use the primary pilot signal (P-CPICH) to receive the scheduling information, and the UE 29 may use the dedicated/demodulation pilot signal (D-CPICH-1) to receive the downlink data traffic. More particularly, the UE 29 may receive the primary pilot signal (P-CPICH) having the first identification, e.g., a first spreading code. Responsive to receiving the primary pilot signal (P-CPICH), the UE 29 may generate channel quality information based on the primary pilot signal (P-CPICH) received from all of the base stations 22, 24, and transmit the channel quality information, e.g., HS-DPCCH-1, to the wireless communications network. The channel quality information, for example, may include modulation information, coding information, transport block size information, MIMO precoding vector information, MIMO rank information, etc.

The UE 29 may then receive downlink scheduling information (H-SCCH) that is transmitted simultaneously from all of the base stations 22, 24, and the UE 29 may receive the downlink scheduling information (HS-SCCH) using the primary pilot signal (P-CPICH) that is also transmitted from all of the base stations 22, 24. More particularly, receiving the downlink scheduling information may include generating a downlink channel estimate using the primary pilot signal and receiving the downlink scheduling information using the downlink channel estimate. Moreover, the scheduling information may include at least one of an identification of a subset of a plurality of base stations 22, 24 and/or an identification of the demodulation pilot signal, and/or the scheduling information may include at least one of modulation information, code information, and/or transport block size information. If the scheduling information is for a MIMO communication, the scheduling information may include at least one of multiple-input-multiple-output, MIMO, precoding vector information and/or MIMO rank information.

A demodulation pilot signal (D-CPICH-1) may be received having a second identification different than the first identification; and downlink data traffic (HS-PDSCH-1) may be received in accordance with the downlink scheduling information using the demodulation pilot signal (D-CPICH-1). Receiving the downlink data traffic (HS-PDSCH-1) using the demodulation pilot signal (D-CPICH-1) may include generating a downlink channel estimate using the demodulation pilot signal (D-CPICH-1) and receiving the downlink data traffic using the downlink channel estimate. Accordingly, receiving the demodulation pilot signal (D-CPICH-1) may include receiving the demodulation pilot signal (D-CPICH-1) while receiving the downlink data traffic. More particularly, receiving the downlink data traffic (HS-DPSCH-1) may include receiving the downlink data traffic during a transmission time interval, TTI, and receiving the demodulation pilot signal (D-CPICH-1) may include receiving the demodulation pilot signal during the TTI.

In embodiments of either of FIGS. 9 or 10, a central controller 21 implemented as a network controller may be separate from any base stations, 22, 24, distributed among base stations, or located in one base station. The controller may select a subset of base stations 22, 24 for downlink transmissions to the UE 29. The subset of the plurality of base stations 22, 24 may include at least one of the plurality of base stations and fewer than all of the plurality of base stations, or the subset of the plurality of base stations may include only one of the plurality of base stations (LPN-1).

Link adaptation (LA) may be used in wireless communications according to some embodiments to match modulation, coding, transport block size, precoding vector, precoding rank, and/or other signal/transmission parameters to conditions of a radio link. In a homogeneous network with adaptive modulation and coding, for example, a UE closer to a base station may experience a relatively higher signal to noise ratio (SNR) and a relatively higher order modulation, and a relatively higher code rate may be assigned for downlink transmission to the closer UE. In contrast, a UE closer to a cell edge (more distant from the base station) may experience a relatively lower signal to noise ratio (SNR), and a relatively lower order modulation and a relatively lower code rate may be assigned for downlink transmissions to the more distant UE. A wireless communication system using link adaptation may provide significant throughput gains relative to a wireless communication system operating without link adaptation.

In a combined cell deployment with spatial reuse, the UE 29 may estimate parameters needed for data transmission using channel sounding. If the UE 29 uses the primary common pilot channel P-CPICH, transmitted simultaneously from all base stations 22, 24 in the macro cell area, to perform channel sounding, the resulting channel estimates will be based on the combined channel from all of the base stations 22, 24 transmitting the common pilot channel P-CPICH. As discussed above with respect to FIGS. 8, 9 and 10, however, the downlink data may be transmitted over a physical data shared channel (HS-PDSCH-1) from only an assigned subset of the base stations 22, 24, e.g., from only one base station LPN-1. To estimate the channel when demodulating the downlink data, e.g., transmitted using HS-PDSCH-1, the dedicated/demodulation pilot channel (D-CPICH-1) may be transmitted from the subset of base stations, e.g., from only one base station LPN-1. In cases where the channel quality information or CQI is calculated based on a primary common pilot channel P-CPICH transmitted by all base stations 22, 24 and data demodulation is performed, based on the dedicated/demodulation pilot channel D-CPICH-1 transmitted from a subset of base stations, using different pilot channels/signals, a proper matching of link adaption parameters may need to be performed, for example, at the central controller 21.

Without a proper matching of link adaption parameters, for example, the UE 29 may report CQI including a requested/reported modulation of 64 QAM (Quadrature Amplitude Modulation) based on channel sounding using the primary common pilot channel (P-CPICH) transmitted by all base stations 22, 24, while the downlink channel using HS-PDSCH-1 transmitted only from LPN-1 may not support 64 QAM using D-CPICH-1. Accordingly, improper link adaptation may result in a loss of throughput thereby reducing potential gains due to spatial reuse.

According to some embodiments disclosed herein, link adaption parameters, e.g., modulation and code rate parameters, may be adjusted at a central controller 21, e.g., implemented at the macro base station MBS, 22 at a base station controller, at a core network, distributed between macro 22 and LPN 24 base stations, etc., rather than following CQI parameters, e.g., modulation, code rate, transport block size, MIMO precoding vector, MIMO rank, etc., provided by the UE 29 via HS-DPCCH (based on the primary common pilot channel P-CPICH).

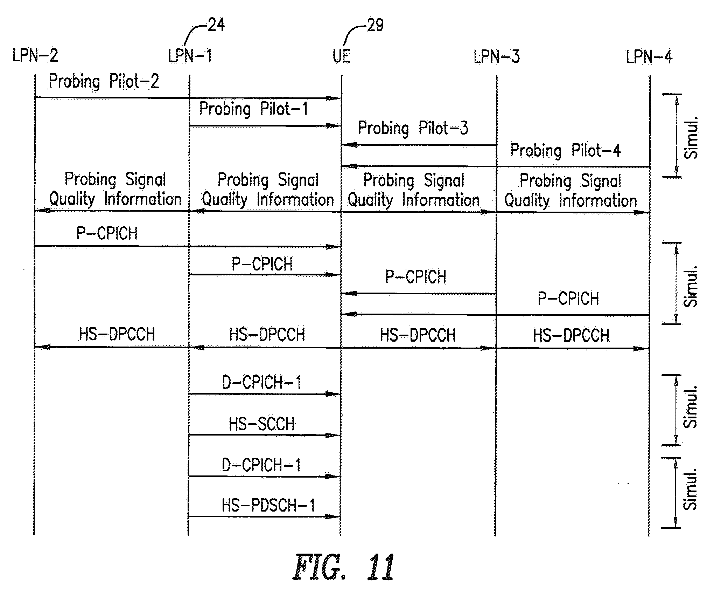

FIG. 11 is a chart of exemplary message sequences/flows illustrating messaging in a soft/shared/combined cell deployment with spatial reuse, with all base stations transmitting a pilot probing signal to enable estimation of channel quality on the downlinks and with a selected base station transmitting a dedicated/demodulation pilot signal, D-CPICH-1. In the example of FIG. 11, there are five base stations, including LPN-1, LPN-2, LPN-3, and LPN-4 and a macro base station (MBS) (not shown). The base stations MBS, LPN-1, LPN-2, LPN-3, and LPN-4 22, 24 within the macro cell area may transmit respective probing pilot signals Probing_Pilot-MBS, Probing_Pilot-1, Probing_Pilot-2, Probing_Pilot-3, and Probing_Pilot-4 during probing periods. For example, all base stations 22, 24 within the macro cell area may simultaneously transmit respective probing pilot signals during a same probing period, e.g., once per ½ second or once per second, or different base stations 22, 24 may transmit respective probing pilot signals during respective different probing periods. Each probing pilot signal may have a respective different identification, e.g., channelization code such as a spreading code, and each probing pilot signal identification may be different than an identification, e.g., channelization code such as a spreading code, of the primary pilot signal P-CPICH and different than dedicated pilot signals, e.g., D-CPICH-MSB, D-CPICH-1, D-CPICH-2, D-CPICH-3, and D-CPICH-4.

The UE 29 may receive a respective probing pilot signal, e.g., Probing_Pilot-MBS, Probing_Pilot-1, Probing_Pilot-2, Probing_Pilot-3, and Probing_Pilot-4, from each base station 22, 24, e.g., the macro base station (MBS), LPN-1, LPN-2, LPN-3, and LPN-4, during a probing period. Responsive to the probing pilot signals, the UE may generate respective probing signal quality information, e.g., an SNR, SINR, etc., for each probing pilot signal. The UE 29 may transmit the probing signal quality information for each base station to a radio access network (RAN) for the probing period, and the RAN central controller 21 may use the probing signal quality information to estimate channel quality for the downlink from each base station 22, 24. Moreover, the central controller 21 may use lookup tables to convert probing signal quality information received from wireless terminal UE 29 to other probing signal quality information that may be more efficiently used for link adaptation and/or combination with the reported signal quality information. Because probing periods may only occur relatively infrequently, e.g., once per ½ second or once per second, the probing signal quality information may not accurately reflect rapidly changing channels.

In addition, the UE 29 may generate reported channel quality information, e.g., including at least one of modulation, code rate, transport block size, MIMO precoding vector, MIMO rank, etc., for the combined downlink channel from all of the base stations 22, 24 to the UE 29 based on the primary common pilot channel P-CPICH transmitted by all of the base stations 22, 24. The UE 29 may transmit the reported channel quality information to a radio access network RAN for each transmission time interval, e.g., every 2 milliseconds, and the RAN central controller 21 may use the reporting channel quality information to generate/estimate the reporting signal quality information, e.g., an SNR, SINR, etc., for the combined downlink from all base stations 22, 24. The central controller 21, for example, may use lookup tables to convert reporting channel quality information received from the UE 29 to reporting signal quality information. Because reporting periods may occur relatively frequently, e.g., once per TTI, or about once per 2 milliseconds, the reporting signal quality information may accurately reflect more rapid changes in a signal quality of the combined downlink.

As further shown in FIG. 11, the base stations 22, 24 within the macro cell area may simultaneously transmit the same primary pilot signal (P-CPICH) during a reporting period. Responsive to receiving the primary pilot signal(s), the UE 29 may generate reported channel quality information, e.g., modulation information, code rate information, transport block size information, etc., for the combined downlink from all of the base stations 22, 24 in the macro cell area to the UE 29, and the UE 29 may transmit the reporting channel quality information to the radio access network using a control channel (HS-DPCCH) transmitted through all of the base stations 22, 24 of the macro cell area. The primary pilot signal may be transmitted relatively frequently, e.g., each TTI, so that the reporting channel quality information is provided from the UE 29 to the radio access network relatively frequently.

The central controller 21 of the radio access network may thus use the probing information and the reported channel quality information to generate downlink scheduling information, e.g., modulation information, code rate information, transport block size information, etc., for a downlink data transmission to the UE 29. In other words, the central controller 21 may modify the reported channel quality information provided by the UE 29 based on probing information provided by the UE 29 to generate scheduling information for the UE 29. The scheduling information may be forwarded to the UE 29, e.g., via HS-SCCH-1, for the downlink data transmission, e.g., via HS-PDSCH-1, as shown in FIG. 11. The dedicated/demodulation pilot signal D-CPICH-1 may be transmitted by the base station LPN-1 24 while transmitting the scheduling information via HS-SCCH-1 from the LPN-1 24 to support reception/demodulation/decoding at the UE 29, and/or the dedicated/demodulation pilot signal D-CPICH-1 may be transmitted from the LPN-1 24 while transmitting the downlink data via HS-PDSCH-1 from the LPN-1 24 to support reception/ demodulation/decoding at the UE 29. According to other embodiments, the primary pilot signal P-CPICH may be transmitted from all base stations 22, 24 of the macro cell area while transmitting the scheduling information via HS-SCCH from all base stations 22, 24 of the macro cell area to support reception/ demodulation/decoding at the UE 29.

While the macro base station 22 is omitted from FIGS. 8-11 for the sake of clarity, it will be understood that the macro base station 22 may transmit a unique probing signal, Probing_Pilot-MBS, during probing periods, and that the macro base station 22 may transmit the primary pilot signal, P-CPICH, during reporting periods. Accordingly, the UE 29 may generate respective signal quality information for each base station, including the macro base station 22, in the macro cell area, and the UE 29 may generate reporting signal quality information based on a combined channel from all base stations, including the macro base station 22. Moreover, any of the base stations, including the macro base station 22, may be selected for downlink data transmission to the UE 29.

Accordingly, the RAN central controller 21 may combine elements of the probing signal quality information with current reporting signal quality information to generate downlink scheduling information, e.g., modulation, code rate, transport block size, MIMO precoding vector, MIMO rank, etc., for a downlink data transmission during a downlink TTI. The RAN central controller 21, for example, may use the following operations to generate scheduling information for a downlink transmission from the base station LPN-1 to the UE 29:
1) Use probing signal quality information, based on respective probing pilot signals Probing_Pilot-MBS, Probing_Pilot-1, Probing_Pilot-2, Probing_Pilot-3, and Probing_Pilot-4, from the UE 29 to provide probing signal quality information, e.g., SINRp_MBS, SINRp_1, SINRp_2, SINRp_3, and SINRp_4, for the base stations 22, 24 MBS, LPN-1, LPN-2, LPN-3, and LPN-4 of the macro cell area;
2) Use reported channel quality information based on P-CPICH from the UE 29 to compute reported signal quality information, e.g., SINR_measured, using reverse look-up tables;
3) Perform a combination, e.g., subtraction, operation combining the reported signal quality information and the probing signal quality information for at least one of the base stations 22, 24 to generate a current estimated signal quality for the downlink from base station LPN-1 to the UE 29, e.g., SINRe_1 = SINR_measured - SINRp_MBS - SINRp_2 - SINRp_3 - SINRp_4;
4) Generate downlink scheduling information, e.g., modulation, code rate, transport block size, MIMO precoding vector, MIMO rank, etc., using the estimated signal quality information, e.g., SINRe_1;
5) Transmit the downlink scheduling information from the base station LPN-1 to the UE 29 e.g., using HS-SCCH-1; and
6) Transmit the downlink data from the base station LPN-1 to the UE 29, e.g., using HS-PDSCH-1 in accordance with the downlink scheduling information.
The reported channel quality information and corresponding reported signal quality information may thus be updated every transmission time interval to reflect rapidly changing channel conditions. In addition, probing signal quality information from other base station downlinks may be combined with, e.g., subtracted from, the reported signal quality information to remove or reduce components of the reported signal quality information due to the other base station downlinks.

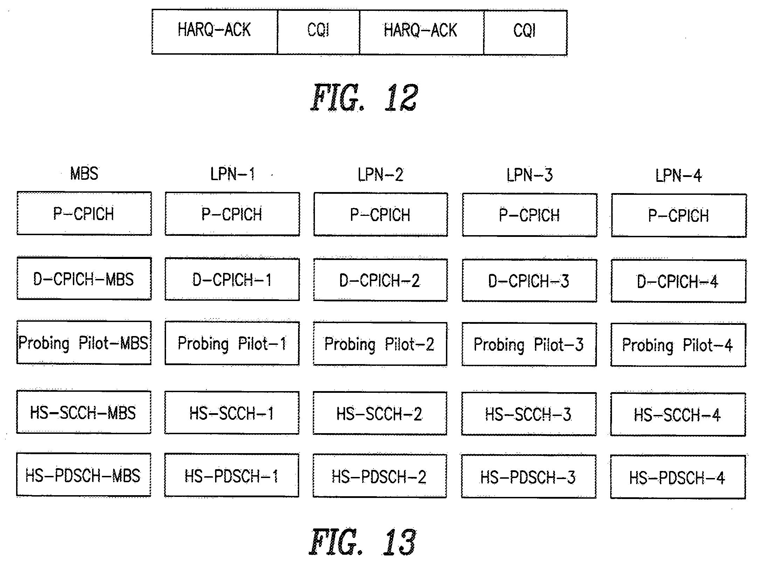

A structure for an HS-DPCCH uplink control channel when the UE 29 is configured in SIMO (single-input-multiple-output) configuration is shown in Figure 12. As shown in FIG. 12, the HS-DPCCH uplink control channel/signal may be used to convey channel quality information CQI, for example, including modulation information, coding information, e.g., code rate information, transport block size information, and Hybrid Automatic Repeat Request Acknowledge (HARQ) information, e.g., acknowledgment/non-acknowledgment. If the network supports MIMO (multiple input multiple output) communications, the CQI may also include MIMO precoding vector information and/or MIMO rank information.

FIG. 13 illustrates exemplary implementations of pilot/control channels/signals for spatial reuse according to some embodiments disclosed herein. As shown in FIG. 13, all of the base stations within the macro cell area may transmit a same primary pilot signal, e.g., primary common pilot channel or P-CPICH, but the base stations 22, 24 of the macro cell area may transmit different dedicated/demodulation pilot signals, e.g., different dedicated common pilot channels D-CPICH-MSB, D-CPICH-1, D-CPICH-2, D-CPICH-3, and D-CPICH-4, different probing pilot signals, e.g., different probing pilot channels Probing_Pilot-MBS, Probing_Pilot-1, Probing_Pilot-2, Probing_Pilot-3, and Probing_Pilot-4, different shared control channels, e.g., different high speed shared control channels or HS-SCCH, and different physical data shared channels, e.g., different high speed dedicated shared channels or HS-PDSCH. The base station LPN-1, for example, may use dedicated/demodulation control signal D-CPICH-1, shared control channel HS-SCCH-1, and physical data shared channel HS-PDSCH-1 for downlink transmissions to the UE during a transmission time interval (TTI), while base stations MBS, LPN-2, LPN-3, and LPN-4 may use respective different dedicated/demodulation control signals, D-CPICH-MBS, D-CPICH-2, D-CPICH-3, and D-CPICH-4, respective different shared control channels, HS-SCCH-MBS, HS-SCCH-2, HS-SCCH-3, and HS-SCCH-4, and respective different physical data shared channels, HS-PDSCH-MBS, HS-PDSCH-2, HS-PDSCH-3, and HS-PDSCH-4, for downlink transmissions to respective other wireless terminals during the same transmission time interval (TTI).

Accordingly, in some embodiments, a subset of base stations, e.g., base stations LPN-1 and LPN-2, may transmit to the UE 29 using dedicated/demodulation control signal D-CPICH-1, shared control channel HS-SCCH-1, and physical data shared channel HS-PDSCH-1 for downlink transmissions to the UE 29 during a transmission time interval (TTI), while other base stations MBS, LPN-3, and LPN-4 may use respective different dedicated/demodulation control signals, D-CPICH-MBS, D-CPICH-3, and D-CPICH-4, respective different shared control channels, HS-SCCH-MBS, HS-SCCH-3, and HS-SCCH-4, and respective different physical data shared channels, HS-PDSCH-MBS, HS-PDSCH-3, and HS-PDSCH-4, for downlink transmissions to respective other wireless terminals during the same transmission time interval (TTI).

The central controller 21 may decide which base stations 22, 24 or subset of base stations should be used to transmit to a particular wireless terminal, and this decision may be based on uplink and/or downlink measurements. When the base station LPN-1 is selected for downlink transmissions to the UE 29, for example, the dedicated/ demodulation pilot signal D-CPICH-1 may be transmitted from the base station LPN-1 to the UE 29, scheduling information for an assigned downlink TTI may be transmitted from the base station LPN-1 to the UE 29 using shared control channel HS-SCCH-1, and downlink data traffic may be transmitted from the base station LPN-1 to the UE 29 during the assigned TTI in accordance with the scheduling information using the physical data shared channel HS-PDSCH-1. The central controller 21 may select other base stations 22, 24 for downlink transmissions to other wireless terminals during the same TTI using respective other dedicated/demodulation pilot signals, shared control channels, and physical data shared channels.

According to some embodiments, dedicated/demodulation pilot signals/channels may be transmitted by each base station 22, 24 in a macro cell area to aid in downlink data transmission/reception. More particularly, each base station 22, 24 in the macro cell area may transmit the common primary pilot signal (P-CPICH) and a unique dedicated/demodulation pilot signals. In addition, each base station 22, 24 in the macro cell area may transmit a unique probing pilot signal, e.g., Probing_Pilot-MBS, Probing_Pilot-1, Probing_Pilot-2, Probing_Pilot-3, and Probing_Pilot-4, as discussed in the message sequence chart of FIG. 11.

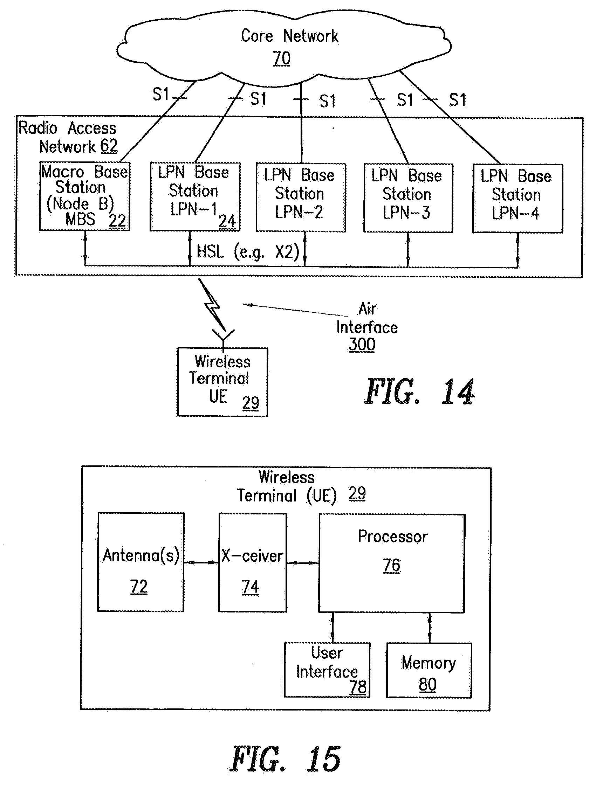

FIG. 14 is a block diagram illustrating elements and functionalities of a network configuration according to some embodiments. As shown, the macro base station (MBS) 22 and the LPNs 24 may be connected via a high speed link HSL, e.g., an X2 interface, where messages may be exchanged between these nodes on a per TTI (transmission time interval) level. In other words, the high speed link HSL may support communication of scheduling information between the macro base station MBS 22 and each low power node LPN-1, LPN-2, LPN-3, and LPN-4 for each transmission time interval. In some embodiments, the base stations 22, 24 may be connected directly to one or more core networks 70, and/or one or more of the base stations may be coupled to core networks 70 through radio network controllers 28. In some embodiments, functionalities of radio network controllers 28 may be performed by base stations 22, 24 and/or core network 70. As discussed herein, base stations 22, 24 communicate with UEs 29 that are within their respective coverage areas. The LPN base stations 24 may communicate with the macro base station 22 through a high speed link(s) such as an X2 interface(s). As discussed above with respect to FIG. 4, the macro base station 22 may define a macro cell area, and each of the LPN base stations 22 may define a respective LPN cell area within the macro cell area.

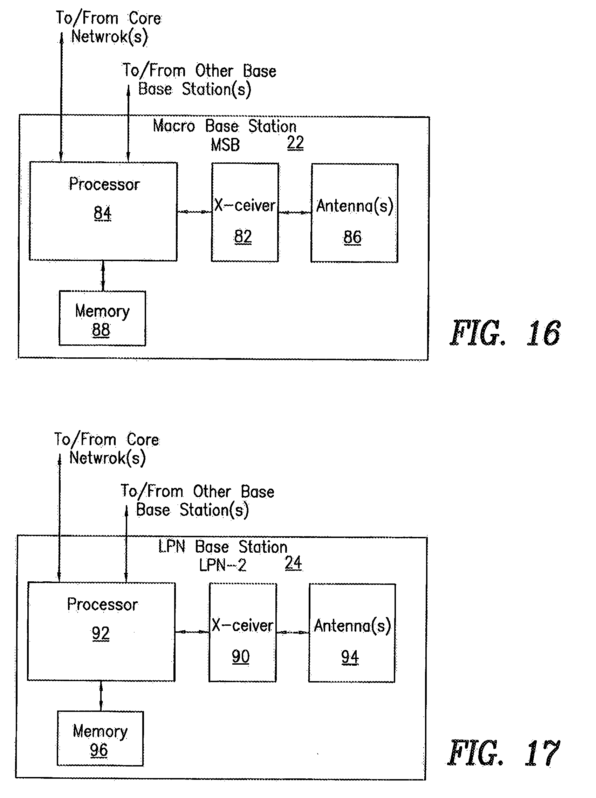

FIG. 15 is a block diagram illustrating elements and functionalities of the UE 29 of FIG. 14, and FIG. 16 is a block diagram illustrating elements and functionalities of the macro base station 22 of FIG. 14. The UE 29 may include an antenna or antenna array 72, a transceiver 74, and a processor 76, a user interface 78, e.g., including one or more of a display, a touch sensitive screen, a keypad, a microphone, a speaker, etc., and a memory 80 which may be coupled to the processor 76. Elements of FIG. 15 are shown by way of example, and illustrated elements may be omitted and/or other elements may be included.

As shown in FIG. 16, the MBS 22 may include a transceiver 82 coupled between a processor 84 and antenna(s) 86, e.g., an antenna array including multiple antennas, and a memory 88 coupled to the processor 84. The macro base station 22 may transmit communications from the processor 84 through the transceiver 82 and the antenna array 86 for reception at the UE 29 via the antenna 72, the transceiver 74, and the processor 76. The UE 29 may transmit communications from the processor 76 though the transceiver 74 and the antenna(s) 72 for reception at one or more of the base stations MBS, LPN-1, LPN-2, LPN-3, LPN-4.

Functionality of a central controller 21 and scheduler, discussed above, may be implemented, for example, at the processor 84 of the macro base station 22. According to some other embodiments, functionality of central controller/scheduler may be implemented, for example, at a network controller separate from any of the base stations, at one or more low power node base stations, distributed among illustrated network elements/functionalities, etc.

FIG. 17 is a block diagram illustrating exemplary elements and functionalities of a low power node base station LPN 24 of FIG. 14. As shown, each LPN base station 24 may include a transceiver 90 coupled between processor 92 and antenna(s) 94, e.g., an antenna array including multiple antennas supporting MIMO communications, and a memory 96 coupled to the processor 92. Accordingly, the LPN base station 24 may transmit communications from the processor 92 through the transceiver 90 and antenna array 94 for reception at the UE 29 through the antenna(s) 72, the transceiver 74, and the processor 76. The UE 29 may transmit communications from the processor 76 through the transceiver 74 and antenna(s) 72 for reception at the LPN base station 24.

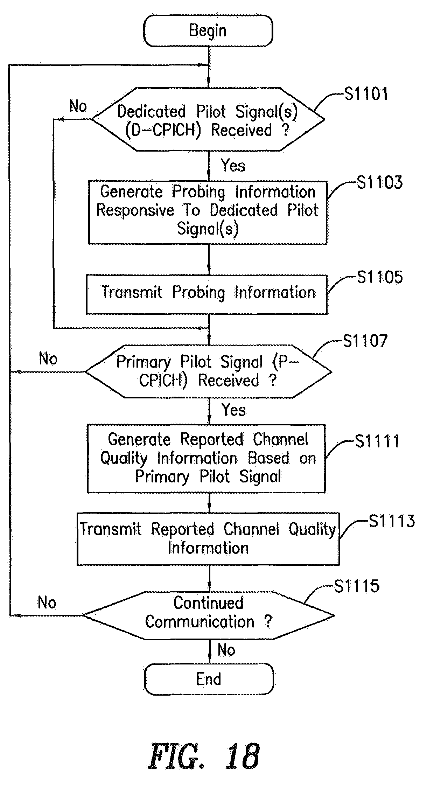

FIG. 18 is a flow chart of an exemplary process of transmitting probing signals and generating reported channel quality in a radio access network 62 including a plurality of base stations 22, 24. As discussed above, the base stations 22, 24 within the macro cell area may transmit respective probing pilot signals Probing_Pilot-MBS, Probing_Pilot-1, Probing_Pilot-2, Probing_Pilot-3, and Probing_Pilot-4 during probing periods. For example, all base stations 22, 24 within the macro cell area may simultaneously transmit respective probing pilot signals during a same probing period, e.g., once per ½ second or once per second, or different base stations 22, 24 may transmit respective probing pilot signals during respective different probing periods. As further discussed above, each probing pilot signal may have a respective different identification, e.g., channelization code such as a spreading code, and each probing pilot signal identification may be different than an identification, e.g., channelization code such as a spreading code, of the primary pilot signal P-CPICH and different than dedicated pilot signals, e.g., D-CPICH-MSB, D-CPICH-1, D-CPICH-2, D-CPICH-3, and D-CPICH-4. More particularly, the UE 29 may be assigned for communication with an LPN base station 24 as shown in FIG. 4.

At block S1101, the UE processor 76 may receive probing pilot signals through the transceiver 74 from the base stations 22, 24 within the macro cell area when transmitted by the respective base stations. If all base stations 22, 24 transmit respective probing pilot signals during a same probing period, the UE 29 may receive all of the probing pilot signals at substantially the same time, or if base stations 22, 24 transmit respective probing pilot signals during different probing periods, the UE 29 may receive the probing pilot signals at different times.

Each time a probing pilot signal is received at block S1101, the UE processor 76 may generate probing information, also referred to as probing channel quality information, responsive to the respective probing pilot signal(s) at block S1103. The probing information, for example, may include signal quality information for the downlink from the base station 22, 24 to the UE 29, such as SINR for the downlink from the base station 22, 24 to the UE 29. At block S1105, the UE processor 76 may transmit the probing information through the transceiver 74 to radio access network 62. Accordingly, updated probing information can be provided by the UE 29 for a base station 22, 24 each time the probing pilot signal is received from the base station 22, 24 at block S1101, for example, during a probing period for that base station. Because the probing pilot signals may be transmitted during relatively infrequent probing periods, e.g., once per ½ second or once per second, conditions of a downlink channel between a base station 22, 24 and a UE 29 may change significantly before the probing information for that base station 22, 24 is updated. In other words, the probing information for a downlink from a base station 22, 24 to a UE 29 may not reflect rapidly changing channel conditions. Accordingly, as discussed below embodiments may include transmitting a primary pilot signal once every TTI to enable update of channel quality information to reflect rapidly changing channel conditions in a fast fading environment.

At block S1107, the UE 29 may receive the primary pilot signal P-CPICH through the transceiver 74 from all base stations 22, 24 within the macro cell area, for example, during a primary pilot signal reporting period. As discussed above, all base stations 22, 24 within the macro cell area may simultaneously and continuously/ periodically transmit the primary pilot signal P-CPICH. More particularly, all base stations 22, 24 may transmit the primary pilot signal P-CPICH once per transmission time interval, e.g., once every 2 milliseconds. This enables determination of channel quality frequently in rapidly changing channel conditions in a fast fading environment.

At block S1111, the UE processor 76 may generate reported channel quality information responsive to a primary pilot signal P-CIPCH received from base stations 22, 24 within the macro cell area. The primary pilot signal P-CPICH has an identification, e.g., channelization code such as a spreading code, that is different than any of the identifications of the probing pilot signal Probing_Pilot-MBS, Probing_Pilot-1, Probing_Pilot-2, Probing_Pilot-3, and Probing_Pilot-4, and that is different than any of the identifications of the dedicated/demodulation pilot signals D-CPICH-MBS, D-CPICH-1, D-CPICH-2, D-CPICH-3, and D-CPICH-4.

The reported channel quality information may include modulation information, code rate information, and/or transport block size information. If the downlink data transmission is a MIMO downlink transmission, the reported channel quality information may also include MIMO precoding vector information and/or MIMO rank information.

At block S1113, the UE processor 76 may transmit the reported channel quality information through the transceiver 74 to the radio access network 62, for example, using a control channel, e.g., HS-DPCCH, that is transmitted to and/or received by all base stations 22, 24 of the macro cell area. As noted above, the identification of the primary pilot signal P-CPICH may be different than the identifications of any of the dedicated/demodulation pilot signals and/or probing pilot signals of any of the base stations 22, 24, and more particularly, the identification of the primary pilot signal P-CPICH may be a spreading code that is orthogonal with respect to spreading codes of each of the base stations 22, 24. The UE processor 76 may continue with operations at block S1115 as long as communication with the radio access network 62 is maintained.

The reported channel quality information based on the primary pilot signal, for example, may be updated during each downlink data transmission, e.g., once per downlink transmission time interval or once every 2 milliseconds. Accordingly, the reported channel quality information may be based on a combined downlink from all of the base stations 22, 24, but the reported channel quality information may reflect rapidly changing channel conditions. As discussed herein, a radio network controller 28 may generate the scheduling information, e.g., transmitted via HS-SCCH, for downlink data transmissions to the UE 29 using the data channel HS-PDSCH-1 from the base station LPN-1 24 based on a combination of the reported channel quality information of blocks S1111 and S 1113 to reflect rapidly changing channel conditions and the probing information of blocks S1103 and S1105 to reflect elements of the downlink from individual base stations.

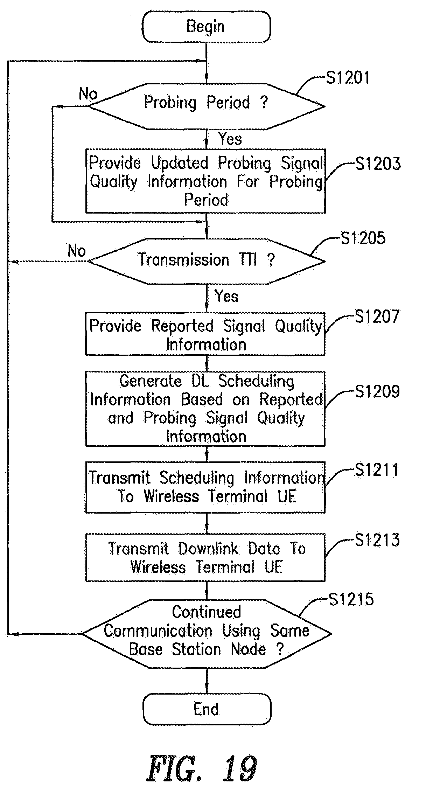

FIG. 19 is a flow chart of an exemplary process of generating scheduling information based on reported signal quality information in a radio access network 62 including a plurality of base stations 22, 24, according to some embodiments disclosed herein. As discussed above, the base stations 22, 24 within the macro cell area may transmit respective probing pilot signals Probing_Pilot-MBS, Probing_Pilot-1, Probing_Pilot-2, Probing_Pilot-3, and Probing_Pilot-4 during probing periods at block S1201. For example, all base stations 22, 24 within the macro cell area may simultaneously transmit respective probing pilot signals during a same probing period, e.g., once per ½ second or once per second, or different base stations 22, 24 may transmit respective probing pilot signals during respective different probing periods. As further discussed above, each probing pilot signal may have a respective different identification, and each probing pilot signal identification may be different than an identification of the primary pilot signal P-CPICH and different than identifications of each of the dedicated/demodulation pilot signals. More particularly, the UE 29 may be assigned for communication with a particular one of the LPN base stations 24.

As discussed above with respect to FIG. 18, the UE 29 may reply with probing information responsive to the probing pilot signal(s) for each probing period, and at block S1203, the central controller 21 may provide updated probing signal quality information for the UE 29. More particularly, the central controller 21 may provide updated probing signal quality information for at least one downlink from at least one base station, e.g., LPN-2, other than base station LPN-1 with which the UE 29 is communicating. For example, the central controller 21 may provide updated probing signal quality information for each downlink from each base station 22, 24 in the macro cell area to the UE 29.

As discussed above with respect to FIG. 18, during a probing period, the UE 29 may provide probing information for each downlink from each base station 22, 24 to the UE 29, and the updated probing signal quality information for each downlink from each base station 22, 24 may be generated responsive to the respective probing information. For example, the probing information for each downlink may include signal quality information, e.g., an SINR/SNR, for the respective downlink, and the probing signal quality information for each downlink may include an SINR/SNR generated based on the corresponding probing information, e.g., using reverse lookup tables. As noted above, the probing periods may be relatively infrequent so that the probing channel quality information and corresponding probing single quality information may not reflect rapidly changing channel conditions. Accordingly, as discussed above, embodiments may include transmitting a primary pilot signal once every TTI to enable update of channel quality information to reflect rapidly changing channel conditions in a fast fading environment.

For each transmission time interval at block S1205, the central controller 21 may provide reported signal quality information for the UE 29 at block S1207. The reported signal quality information, for example, may be generated responsive to reported channel quality information provided by the UE 29 responsive to a previous downlink transmission using the primary pilot signal P-CPICH. For example, the reported channel quality information may include one or more of modulation information, code rate information, transport block size information, MIMO precoding vector information, MIMO rank information, etc., and the reported signal quality information may include an SINR/SNR generated based on the corresponding reported channel quality information, e.g., using reverse lookup tables. As noted above, the reported signal quality information may be updated each TTI so that the reported channel quality information and corresponding reported single quality information may reflect rapidly changing channel conditions.

At block S1209, the network controller may generate downlink scheduling information for the TTI based on the probing signal quality information and the reported channel quality information for a downlink transmission to the UE 29 using the downlink channel HS_PDSCH-1 from the base station LPN-1 24 to the UE 29. Generating the downlink scheduling information may include combining the probing signal quality and the reported signal quality to provide an estimate of a signal quality of the first downlink channel HS-PDSCH-1 from the base station LPN-1 24 to the UE 29, and generating the downlink scheduling information based on the estimate of the signal quality of the first downlink channel.

More particularly, the reported signal quality information may include an SINR estimate of the combined downlink from all base stations 22, 24; the probing signal quality information may include probing signal quality information, SINRp_MBS, SINRp_1, SINRp_2, SINRp_3, and SINRp_4, for each of the base stations 22, 24; and combining the probing signal quality information and the reported signal quality information may include subtracting probing signal quality information for each of the base stations 22, 24 other than LPN-1 from the reported signal quality information, e.g., SINRe_1 = SINR_measured - SINRp_MBS - SINRp_2 - SINRp_3 - SINRp_4. The combining of the probing signal quality information and the reported signal quality information may thus provide an estimated SINR (SINRe_1) for the downlink from base station LPN-1 24 for the downlink transmission time interval. The downlink scheduling information may include at least one of modulation information, code rate information, transport block size information, MIMO precoding vector information, MIMO rank information, etc. that is/are selected based on SINRe_1, for example, using lookup tables.

At block S1211, the downlink scheduling information may be transmitted from the base station LPN-1 to the UE 29 over the shared control channel HS-SCCH-1, and at block S1213, the downlink data may be transmitted from the base station LPN-1 to the UE 29 over the downlink data channel HS-PDSCH-1 in accordance with the scheduling information. The downlink scheduling information may include at least one of modulation information, code rate information, transport block size information, MIMO precoding vector information, MIMO rank information, etc.

According to some further embodiments, downlink transmissions to the UE 29 at block S1213 may be provided from multiple base stations, e.g., LPN-1 and LPN-3, but fewer than all of the base stations MBS, LPN-1, LPN-2, LPN-3, and LPN-4. In this case, the estimated downlink signal quality may be calculated as: SINRe_1 = SINR_measured - SINRp_MBS - SINRp_2 - SINRp_4. In other words, the estimated signal quality may be calculated by subtracting probing signal qualities for all base stations that are not used to transmit the downlink to the UE 29.

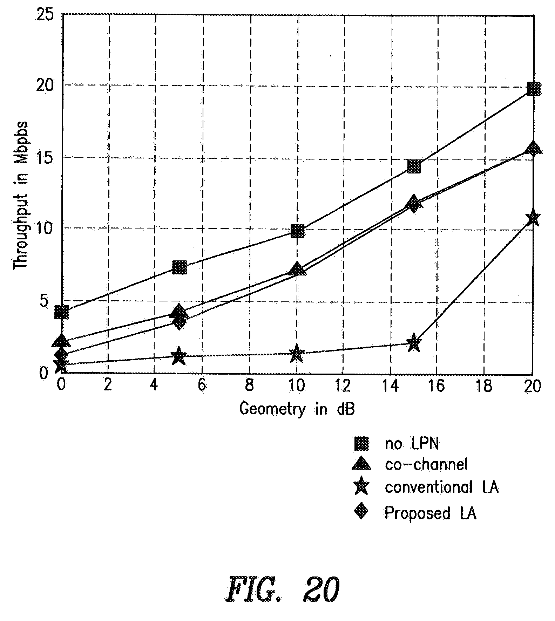

FIG. 20 is a graph illustrating simulation results in a network with two LPNs where the downlink paths from each of the LPNs to the UE provide a same SINR signal quality. In other words, the UE of the simulation is located at a border between cell areas of the two LPNs of the simulation. As shown in FIG. 20, the proposed link adaptation indicated by diamonds in a soft/combined cell deployment may provide improved performance/throughput relative to conventional link adaptation indicated by stars across the range of geometries of the simulation. Moreover, the proposed link adaptation indicated by diamonds in a soft/combined cell deployment may provide performance/throughput that is similar to that of a co-channel deployment indicated by triangles, which may represent an upper performance bound for a heterogeneous network.

Abbreviations that may have been used herein are as follows:
- MIMO: Multiple input multiple output
- HSDPA: High Speed Downlink Packet Access
- HSPA: High Speed Packet Access
- HS-SCCH: High speed shared control channel
- HS-PDSCH: High speed Physical data shared channel
- HARQ: Hybrid automatic repeat request
- UE: User Equipment
- TTI: Transmit Time Interval
- PCI: Precoding control index
- Tx: Transmitter
- LPN: Low Power Node
- L1: Layer 1
- RRU: Remote Radio Unit
- RNC: Radio Network Controller
- DL: Downlink
- WCDMA: Wideband Code Division Multiple Access
- 3GPP: 3rd Generation Partnership Project
- CPICH: Common Pilot Channel
- GSM: Global System for Mobile (Communication)
- LTE: Long Term Evolution
- Wimax: Worldwide Interoperability for Microwave Access

The present invention can be realized in hardware, or a combination of hardware and software. Any kind of computing system, or other apparatus adapted for carrying out the methods described herein, is suited to perform the functions described herein. A typical combination of hardware and software could be a specialized computer system, having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention.

## Claims

1. A method of probing, at a macro-base station, a wireless combined-cell communication network (20), the method comprising:
directing at least one low power node (24) to transmit a probing signal (S100), the probing signal including at least one code;
receiving from a wireless terminal (29) an indication of downlink channel quality, the channel quality indication based on a measure of power of the probing signal received by the wireless terminal (S102); and
selectively directing at least one of the at least one low power node (24) to communicate with the wireless terminal (29), the selectively directing being based on the indication of downlink channel quality (S104).

2. The probing method of Claim 1, wherein each of a plurality of low power nodes (24) are directed to transmit the probing signal (S100) in succession.

3. The probing method of Claim 1, wherein each of a plurality of low power nodes (24) are directed to transmit the probing signal (S100) simultaneously.

4. The probing method of any of Claims 1-3, wherein the measure of power is one of a signal to noise ratio and a signal to noise plus interference ratio (S102).

5. The probing method of any of Claims 1-4, wherein the code (54) is known to the wireless terminal (29).

6. A method of providing, via one of a macro base station and a low power node base station, communications in a radio access combined-cell network (62) including a plurality of base stations (22, 24), the radio access network (62) being in communication with a wireless terminal (29) over a first downlink channel from a first low power node base station (24) of the plurality of base stations (22, 24) to the UE 29, the method comprising:
providing (S1203), in response to direction from the macro base station, probing signal quality information for a second downlink channel from a second low power node base station (24) of the plurality of base stations 22, 24 to the wireless terminal (29), the probing signal quality information being received from the wireless terminal (29) in response to a coded probing signal transmitted by the second low power node base station (24) to the wireless terminal (29), the coded probing signal being transmitted under the direction of the macro base station;
providing (S1207) from the second low power node base station (24) to the macro base station reported channel quality information for the wireless terminal (29); and
receiving at the second low power node base station (24) an indication from the macro base station whether to generate downlink scheduling information for a downlink transmission to the wireless terminal (29), the indication being based on the reported channel quality information; and
generating (S1209), when indicated, the downlink scheduling information based on the probing signal quality information and the reported channel quality information.

7. The method of Claim 6, further comprising:
transmitting (S1211) the scheduling information to the wireless terminal (29); and
transmitting (S1213) downlink data from the first low power node base station (24) to the wireless terminal (29) over the first downlink channel in accordance with the scheduling information.

8. The method of any of Claims 6 and 7, wherein transmitting the downlink scheduling information to the wireless terminal (29) comprises transmitting the downlink scheduling information over a shared control channel, HS-SCCH, and wherein transmitting the downlink data comprises transmitting the downlink data over a physical data shared channel, HS-PDSCH.

9. A macro base station in a wireless combined-cell communication system, the macro base station comprising:
a central controller (21), the central controller (21) configured to:
direct at least one low power node (24) to transmit a probing code according to a plurality of transmission patterns to a wireless terminal (29);
receive from the wireless terminal (29) indications of channel quality by which the probing code is received by the wireless terminal (29), each indication of channel quality corresponding to a different one of the plurality of transmission patterns;
selectively direct at least one of the at least one low power node (24) to communicate with the wireless terminal (29), the selectively directing being based on the indication of downlink channel quality (S104); and
determine a transmission pattern to use for transmission of data to the wireless terminal (29) based on the received indications of channel quality (56).

10. The macro base station of Claim 9, wherein a different probing code (54) is transmitted for each of the plurality of transmission patterns.

11. The macro base station of any of Claims 9 and 10, wherein transmission of a probing code (54) occurs periodically.

12. A method of operating a wireless terminal in a radio access combined-cell network including a plurality of base stations (MBS, LPN-1, LPN-2, LPN-3, LPN-4), the method comprising:
generating (S1103) probing information responsive to a probing pilot signal (Probing_Pilot-2) received from the radio access network low power node, wherein the probing pilot signal has a first identification (54);
transmitting (S1105) the probing information to the radio access network;
generating (S1111) reported channel quality information (50) responsive to a primary pilot signal, P-CPICH, received from the radio access network, wherein the primary pilot signal has a second identification (54) different than the first identification (54); and
transmitting (S1113) the reported channel quality information (56) to the radio access network.

13. The method of Claim 12 wherein the first identification (54) comprises a first channelization code, wherein the second identification (54) comprises a second channelization code, and wherein the first and second channelization codes are different.

14. A wireless terminal in a combined-cell wireless network, comprising:
a memory (50) configured to store:
a probing channel code (54), the probing channel code (54) being received from a macro base station (22) and at least one low power node (24); and
a channel quality indication (56) associated with the probing channel code; and a processor (52) configured to:
detect the probing channel code (58, 54); and
determine a channel quality indication (60, 56) of a signal carrying the probing channel code (54); and
transmit (S1113) the reported channel quality information (56) to the radio access network;
the channel quality indication (56) being transmitted on an uplink via one of a high speed dedicated physical control channel, HS-DPPCH, and a special probe channel.

15. The wireless terminal of Claim 14, wherein the received probing channel code (54) is one of a primary pilot signal and a probing pilot signal.

## Patentansprüche

1. Verfahren, um an einer Makrobasisstation ein drahtloses Kombinationszellen-Kommunikationsnetz (20) zu untersuchen, wobei das Verfahren Folgendes umfasst:
Anweisung an mindestens einen Niederleistungsknoten (24), ein Untersuchungssignal (S100) zu übertragen, wobei das Untersuchungssignal mindestens einen Code einschließt;
Empfang einer Anzeige von Downlink-Kanalqualität von einem drahtlosen Endgerät (29), wobei die Kanalqualitätsanzeige auf einem Maß der Leistung des Untersuchungssignals basiert, das von dem drahtlose Endgerät (S102) empfangen wird; und
Selektive Anweisung an mindestens einen des mindestens einen Niederleistungsknotens (24), mit dem drahtlosen Endgerät (29) zu kommunizieren, wobei die selektive Anweisung auf der Anzeige von Downlink-Kanalqualität (S104) basiert.

2. Untersuchungsverfahren nach Anspruch 1, worin jeder einer Vielzahl von Niederleistungsknoten (24) angewiesen wird, das Untersuchungssignal (S100) aufeinander folgend zu übertragen.

3. Untersuchungsverfahren nach Anspruch 1, worin jeder einer Vielzahl von Niederleistungsknoten (24) angewiesen wird, das Untersuchungssignal (S100) gleichzeitig zu übertragen.

4. Untersuchungsverfahren nach einem der Ansprüche 1-3, worin das Maß der Leistung eins von Folgenden ist: ein S/R(Signal zu Rauschen)-Verhältnis und ein SINR(Signal zu Rauschen plus Störung)-Verhältnis (S102).

5. Untersuchungsverfahren nach einem der Ansprüche 1-4, worin der Code (54) dem drahtlosen Endgerät (29) bekannt ist.

6. Verfahren, um über eine einer Makrobasisstation und einer Niederleistungsknoten-Basisstation Kommunikationen in einem Kombinationszellen-Funkzugangsnetz (62) bereitzustellen, das eine Vielzahl von Basisstationen (22, 24) einschließt, wobei das Funkzugangsnetz (62) mit einem drahtlosen Endgerät (29) über einen ersten Downlink-Kanal von einer ersten Niederleistungsknoten-Basisstation (24) der Vielzahl von Basisstationen (22, 24) zu dem UE (29) in Kommunikation steht, wobei das Verfahren Folgendes umfasst:
Bereitstellen (S1203) von Untersuchungssignal-Qualitätsinformation für einen zweiten Downlink-Kanal von einer zweiten Niederleistungsknoten-Basisstation (24) der Vielzahl von Basisstationen (22, 24) zu dem drahtlosen Endgerät (29) als Antwort auf Anweisung von der Makrobasisstation, wobei die Untersuchungssignal-Qualitätsinformation vom drahtlosen Endgerät (29) als Antwort auf ein codiertes Untersuchungssignal empfangen wird, das von der zweiten Niederleistungsknoten-Basisstation (24) an das drahtlose Endgerät (29) übertragen wird, wobei das codierte Untersuchungssignal unter Anweisung der Makrobasisstation übertragen wird;
Bereitstellen (S1207) gemeldeter Kanalqualitätsinformation für das drahtlose Endgerät (29) von der zweiten Niederleistungsknoten-Basisstation (24) an die Makrobasisstation; und
Empfangen einer Anzeige von der Makrobasisstation an der zweiten Niederleistungsknoten-Basisstation (24), ob Downlink-Scheduling-Information für eine Downlink-Übertragung an das drahtlose Endgerät (29) zu erzeugen ist, wobei die Anzeige auf der gemeldeten Kanalqualitätsinformation basiert; und
Erzeugen (S1209) der Downlink-Scheduling-Information auf der Basis der Untersuchungssignal-Qualitätsinformation und der gemeldeten Kanalqualitätsinformation, wenn so angezeigt.

7. Verfahren nach Anspruch 6, außerdem umfassend:
Übertragen (S1211) der Scheduling-Information an das drahtlose Endgerät (29); und
Übertragen (S 1213) von Downlink-Daten von der ersten Niederleistungsknoten-Basisstation (24) an das drahtlose Endgerät (29) über den ersten Downlink-Kanal gemäß der Scheduling-Information.

8. Verfahren nach einem der Ansprüche 6 und 7, worin das Übertragen der Downlink-Scheduling-Information an das drahtlose Endgerät (29) das Übertragen der Downlink-Scheduling-Information über einen gemeinsam genutzten Steuerkanal, HS-SCCH, umfasst und worin das Übertragen der Downlink-Daten das Übertragen der Downlink-Daten über einen gemeinsam genutzten physikalischen Datenkanal, HS-PDSCH, umfasst.

9. Makrobasisstation in einem drahtlosen Kombinationszellen-Kommunikationssystem, wobei die Makrobasisstation Folgendes umfasst:
eine Zentralsteuerung (21), wobei die Zentralsteuerung (21) für Folgendes konfiguriert ist:
Anweisung an mindestens einen Niederleistungsknoten (24), einen Untersuchungscode gemäß einer Vielzahl von Übertragungsmustern an ein drahtloses Endgerät (29) zu übertragen;
Empfang von Anzeigen von Kanalqualität von dem drahtlosen Endgerät (29), wodurch der Untersuchungscode von dem drahtlosen Endgerät (29) empfangen wird, wobei jede Anzeige von Kanalqualität einem verschiedenen der Vielzahl von Übertragungsmustern entspricht;
Selektive Anweisung an mindestens einen des mindestens einen Niederleistungsknotens (24), mit dem drahtlosen Endgerät (29) zu kommunizieren, wobei die selektive Anweisung auf der Anzeige von Downlink-Kanalqualität (S104) basiert; und
Bestimmung eines Übertragungsmusters zur Verwendung für die Übertragung von Daten an das drahtlose Endgerät (29) auf der Basis der empfangenen Anzeigen von Kanalqualität (56).

10. Makrobasisstation nach Anspruch 9, worin ein verschiedener Untersuchungscode (54) für jedes der Vielzahl von Übertragungsmustern übertragen wird.

11. Makrobasisstation nach einem der Ansprüche 9 und 10, worin Übertragung eines Untersuchungscodes (54) periodisch erfolgt.

12. Verfahren zum Betreiben eines drahtlosen Endgeräts in einem Kombinationszellen-Funkzugangsnetz einschließlich einer Vielzahl von Basisstationen (MBS, LPN-1, LPN-2, LPN-3, LPN-4), wobei das Verfahren Folgendes umfasst:
Erzeugen (S1103) von Untersuchungsinformation, reaktionsfähig auf ein Untersuchungspilotsignal (Probing_Pilot-2), das vom Funkzugangsnetz-Niederleistungsknoten empfangen wird, worin das Untersuchungspilotsignal eine erste Identifikation (54) hat;
Übertragen (S1105) der Untersuchungsinformation an das Funkzugangsnetz;
Erzeugen (S1111) von gemeldeter Kanalqualitätsinformation (50), reaktionsfähig auf ein primäres Pilotsignal, P-CPICH, das vom Funkzugangsnetz empfangen wird, worin das primäre Pilotsignal eine zweite Identifikation (54) hat, die von der ersten Identifikation (54) verschieden ist; und
Übertragen (S1113) der gemeldeten Kanalqualitätsinformation (56) an das Funkzugangsnetz.

13. Verfahren nach Anspruch 12, worin die erste Identifikation (54) einen ersten Kanalisationscode umfasst, worin die zweite Identifikation (54) einen zweiten Kanalisationscode umfasst und worin die ersten und zweiten Kanalisationscodes verschieden sind.

14. Drahtloses Endgerät in einem drahtlosen Kombinationszellennetz, Folgendes umfassend:
einen Speicher (50), der dazu konfiguriert ist, Folgendes zu speichern:
einen Untersuchungskanalcode (54), wobei der Untersuchungskanalcode (54) von einer Makrobasisstation (22) und mindestens einem Niederleistungsknoten (24) empfangen wird; und
eine Kanalqualitätsanzeige (56), die mit dem Untersuchungskanalcode assoziiert ist; und
einen Prozessor (52), konfiguriert zum:
Erkennen des Untersuchungskanalcodes (58, 54); und
Bestimmen einer Kanalqualitätsanzeige (60, 56) eines Signals, das den Untersuchungskanalcode (54) trägt; und
Übertragen (S1113) der gemeldeten Kanalqualitätsinformation (56) an das Funkzugangsnetz;
wobei die Kanalqualitätsanzeige (56) auf einem Uplink über einen eines dedizierten physikalischen Hochgeschwindigkeits-Steuerkanals, HS-DPPCH, und eines speziellen Untersuchungskanals übertragen wird.

15. Drahtloses Endgerät nach Anspruch 14, worin der empfangene Untersuchungskanalcode (54) eins eines primären Pilotsignals und eines Untersuchungspilotsignals ist.

## Revendications

1. Procédé de sondage, au niveau d'une macrostation de base, d'un réseau de communication à cellules combinées sans fil (20), le procédé comprenant les étapes ci-dessous consistant à :
commander à au moins un noeud à faible puissance (24) de transmettre un signal de sondage (S100), le signal de sondage incluant au moins un code ;
recevoir, en provenance d'un terminal sans fil (29), une indication de qualité de canal de liaison descendante, l'indication de qualité de canal étant basée sur une mesure de puissance du signal de sondage reçu par le terminal sans fil (S102) ; et
commander de manière sélective, à au moins l'un dudit au moins un noeud à faible puissance (24), de communiquer avec le terminal sans fil (29), la commande sélective étant basée sur l'indication de qualité de canal de liaison descendante (S104).

2. Procédé de sondage selon la revendication 1, dans lequel il est commandé à chaque noeud d'une pluralité de noeuds à faible puissance (24) de transmettre le signal de sondage (S100) en succession.

3. Procédé de sondage selon la revendication 1, dans lequel il est commandé à chaque noeud d'une pluralité de noeuds à faible puissance (24) de transmettre le signal de sondage (S 100) de manière simultanée.

4. Procédé de sondage selon l'une quelconque des revendications 1 à 3, dans lequel la mesure de puissance correspond à une mesure parmi un rapport « signal sur bruit » et un rapport « signal sur bruit plus brouillage » (S 102).

5. Procédé de sondage selon l'une quelconque des revendications 1 à 4, dans lequel le code (54) est connu du terminal sans fil (29).

6. Procédé de fourniture, par l'intermédiaire de l'une parmi une macrostation de base et une station de base de noeud à faible puissance, de communications dans un réseau d'accès radio à cellules combinées (62) incluant une pluralité de stations de base (22, 24), le réseau d'accès radio (62) étant en communication avec un terminal sans fil (29) sur un premier canal de liaison descendante, d'une première station de base de noeud à faible puissance (24) de la pluralité de stations de base (22, 24) à l'équipement UE (29), le procédé comprenant les étapes ci-dessous consistant à :
fournir (S 1203), en réponse à une commande émanant de la macrostation de base, des informations de qualité de signal de sondage pour un second canal de liaison descendante, d'une seconde station de base de noeud à faible puissance (24) de la pluralité de stations de base (22, 24) au terminal sans fil (29), les informations de qualité de signal de sondage étant reçues à partir du terminal sans fil (29) en réponse à un signal de sondage codé transmis par la seconde station de base de noeud à faible puissance (24) au terminal sans fil (29), le signal de sondage codé étant transmis sous la commande de la macrostation de base ;
fournir (S 1207), de la seconde station de base de noeud à faible puissance (24) à la macrostation de base, des informations de qualité de canal signalées pour le terminal sans fil (29) ; et
recevoir, au niveau de la seconde station de base de noeud à faible puissance (24), une indication en provenance de la macrostation de base, indiquant s'il convient de générer des informations de planification de liaison descendante pour une transmission en liaison descendante vers le terminal sans fil (29), l'indication étant basée sur les informations de qualité de canal signalées ; et
générer (S1209), lorsque cela est indiqué, les informations de planification de liaison descendante, sur la base des informations de qualité de signal de sondage et des informations de qualité de canal signalées.

7. Procédé selon la revendication 6, comprenant en outre les étapes ci-dessous consistant à :
transmettre (S1211) les informations de planification au terminal sans fil (29) ; et
transmettre (S 1213) des données de liaison descendante, de la première station de base de noeud à faible puissance (24) au terminal sans fil (29), sur le premier canal de liaison descendante selon les informations de planification.

8. Procédé selon l'une quelconque des revendications 6 et 7, dans lequel l'étape de transmission des informations de planification de liaison descendante au terminal sans fil (29) consiste à transmettre les informations de planification de liaison descendante sur un canal de commande partagé, HS-SCCH, et dans lequel l'étape de transmission des données de liaison descendante consiste à transmettre les données de liaison descendante sur un canal partagé de données physique, HS-PDSCH.

9. Macrostation de base dans un système de communication à cellules combinées sans fil, la macrostation de base comprenant :
un contrôleur central (21), le contrôleur central (21) étant configuré de manière à :
commander à au moins un noeud à faible puissance (24) de transmettre un code de sondage selon une pluralité de motifs de transmission à un terminal sans fil (29) ;
recevoir, en provenance du terminal sans fil (29), des indications de qualité de canal moyennant quoi le code de sondage est reçu par le terminal sans fil (29), chaque indication de qualité de canal correspondant à un motif distinct de la pluralité de motifs de transmission ;
commander de manière sélective, à au moins l'un dudit au moins un noeud à faible puissance (24), de communiquer avec le terminal sans fil (29), la commande sélective étant basée sur l'indication de qualité de canal de liaison descendante (S104) ; et
déterminer un motif de transmission à utiliser dans le cadre d'une transmission de données au terminal sans fil (29) sur la base des indications de qualité de canal reçues (56).

10. Macrostation de base selon la revendication 9, dans laquelle un code de sondage distinct (54) est transmis pour chaque motif de la pluralité de motifs de transmission.

11. Macrostation de base selon l'une quelconque des revendications 9 et 10, dans lequel la transmission d'un code de sondage (54) se produit périodiquement.

12. Procédé d'exploitation d'un terminal sans fil dans un réseau d'accès radio à cellules combinées incluant une pluralité de stations de base (MBS, LPN-1, LPN-2, LPN-3, LPN-4), le procédé comprenant les étapes ci-dessous consistant à :
générer (S1103) des informations de sondage en réponse à un signal pilote de sondage (Probing_Pilot-2) reçu à partir du noeud à faible puissance de réseau d'accès radio, dans lequel le signal pilote de sondage présente une première identification (54) ;
transmettre (S11105) les informations de sondage au réseau d'accès radio ;
générer (S1111) des informations de qualité de canal signalée (50), en réponse à un signal pilote primaire, P-CPICH, reçu à partir du réseau d'accès radio, dans lequel le signal pilote primaire présente une seconde identification (54) distincte de la première identification (54) ; et
transmettre (S1113) les informations de qualité de canal signalée (56) au réseau d'accès radio.

13. Procédé selon la revendication 12, dans lequel la première identification (54) comporte un premier code de découpage en canaux, dans lequel la seconde identification (54) comporte un second code de découpage en canaux, et dans lequel les premier et second codes de découpage en canaux sont différents.

14. Terminal sans fil dans un réseau sans fil à cellules combinées, comprenant :
une mémoire (50) configurée de manière à stocker :
un code de canal de sondage (54), le code de canal de sondage (54) étant reçu à partir d'une macrostation de base (22) et d'au moins un noeud à faible puissance (24) ; et
une indication de qualité de canal (56) associée au code de canal de sondage ; et
un processeur (52) configuré de manière à :
détecter le code de canal de sondage (58, 54) ; et
déterminer une indication de qualité de canal (60, 56) d'un signal transportant le code de canal de sondage (54) ; et
transmettre (S1113) les informations de qualité de canal signalée (56) au réseau d'accès radio ;
l'indication de qualité de canal (56) étant transmise sur une liaison montante par l'intermédiaire de l'un parmi un canal de commande physique dédié haut débit, HS-DPPCH, et un canal de sondage spécial.

15. Terminal sans fil selon la revendication 14, dans lequel le code de canal de sondage reçu (54) correspond à l'un parmi un signal pilote primaire et un signal pilote de sondage.
